# EUROPEAN PATENT SPECIFICATION

(11) **EP 1 475 530 B1**
(45) Date of publication and mention of the grant of the patent: **30.05.2007**
(21) Application number: 04018964.9
(22) Date of filing: 22.03.1999
(51) Int. Cl.: F02F 1/24, F02M 55/02, F02M 61/14, F02M 69/46

(54) **Direct injection type internal combustion engine**
Brennkraftmaschine mit Direkteinspritzung
Moteur à combustion interne avec injection directe

(30) Priority: 03.04.1998 JP 9147498; 02.04.1998 JP 9048098; 02.04.1998 JP 9048198; 23.03.1998 JP 9397298
(43) Date of publication of application: 10.11.2004
(62) Divisional of application: 99105782.9
(73) Proprietor: YAMAHA HATSUDOKI KABUSHIKI KAISHA, Iwata-shi, Shizuoka-ken 438 (JP)
(72) Inventor: Ito, Shoji, Iwata-Shi Shizuoka-ken (JP); Takasu, Daisuke, Iwata-Shi Shizuoka-ken (JP); Yonezawa, Minoru, Iwata-Shi Shizuoka-ken (JP); Suzuki, Yuichi, Iwata-Shi Shizuoka-ken (JP)
(74) Representative: Grünecker, Kinkeldey, Stockmair & Schwanhäusser Anwaltssozietät

(56) References cited:
- EP-A- 0 022 926
- EP-A- 0 496 029
- EP-A- 0 558 072
- EP-A- 0 694 682
- WO-A-87/00246
- US-A- 4 938 193
- US-A- 5 327 864
- US-A- 5 709 190

## Description

The present invention relates to a direct injection type internal combustion engine having a fuel rail for supplying fuel to fuel injection valves inserted in valve attachment holes formed in a cylinder head.

Direct injection type combustion engines, also known as in-cylinder fuel-injected engines, wherein fuel is supplied by injecting it directly into the cylinders (cylinder bores), have recently attracted attention as a possible means of achieving increased power output and cleaner exhaust. This type of engine is constructed with fuel injection valves - which inject fuel directly into the cylinders - attached to the cylinder head, and a fuel rail - which supplies fuel to said fuel injection valves - connected to said fuel injection valves.

An example of the abovementioned structure for attaching the fuel injection valves and fuel rail to the cylinder head and, accordingly, a direct injection type internal combustion engine as indicated above, is disclosed in Unexamined Published Japanese Patent Application (JP-A) No. H8-312503. This conventional structure is configured by disposing the fuel rail so that it covers the fuel introduction part of the fuel injection valve, bolting a supporting stay that is formed so as to project in a perpendicular axis to said fuel rail to the cylinder head, bolting a clamping member for fixing the fuel injection valves to the cylinder head, and clamping the flange parts of the fuel injection valves with the tip of said clamping member.

In the abovementioned conventional engine, a structure is employed whereby the rail attachment boss part for attaching the fuel rail to the cylinder head and the valve attachment boss part for attaching the fuel injection valves to the cylinder head are formed separately; however, this leads to problems in that it is difficult to make enough room for these two boss parts on the cylinder head, and in that the assembly requires a large amount of labor because the fuel rail and fuel injection valves are fixed separately.

In particular, when the fuel injection valves are provided at the air intake port side parts of the cylinder head so that their injection outlets open into the combustion cavity, the fuel injection valves are disposed in a narrow part between the air intake ports of the cylinder head and the interface of the cylinder block side surface, but the nature of these parts is such that there is little room available, and it is difficult to form said two boss parts on the cylinder head.

Also, when the rail attachment boss part and valve attachment boss part are formed on said cylinder head, screw holes are needed for the attachment bolts; however, the boss parts for the provision of screw holes project toward the water-cooling jacket inside the cylinder head, resulting in a corresponding narrowing of the water-cooling jacket that could impede the flow of cooling water.

Incidentally, said fuel rail is subjected to large reaction forces, which act toward the outside in the direction of the fuel injection valve axis, due to the high pressures that occur in the fuel inside it as the fuel injection valves open and close. In the conventional structure described in the abovementioned publication, said supporting stays project out away from the fuel rail, and the parts that are separated from said fuel rail are fixed to the cylinder head, so that a bending moment acts due to the abovementioned reaction forces, and accordingly there have been problems in that the rigidity of the supporting stay parts must be increased to enable them to withstand this bending moment, resulting in a corresponding increase in the weight of the engine.

Also, since the fuel injection valves and supporting stays are separated from each other in the direction perpendicular to the fuel rail axis, they require a large amount of space; in particular, it is difficult to secure the space required for optimal placement, such as disposing the fuel injection valves adjacent to the air intake ports and roughly parallel with said ports, with the resulting problem that constraints are imposed on the layout freedom.

Incidentally, although a characterizing feature of the abovementioned in-cylinder fuel injected engine is that the fuel/air mix is much leaner than the theoretical fuel/air mix, stabilizing this sort of lean combustion necessitates stratifying the injected fuel and air and guiding this stratified - and thus easily combusted - fuel layer to the vicinity of the spark plug.

Further, JP-A No. H8-312503 presents a conventional structure which is configured by providing the fuel injection valves with a flange part and a sealing surface, fixing the said fuel injection valves into position in the cylinder head by clamping the upper surface of said flange parts with a highly rigid valve clamping member fixed to the cylinder head, thereby bringing the lower surface of said flange parts into contact with the cylinder head side, and accommodating process tolerances between the fuel injection valves, valve attachment holes and clamping members by interspersing an elastically compressible gasket between the sealing surface of the fuel injection valves and the sealing surface of the valve attachment holes in the cylinder head.

However, since the abovementioned conventional engine is configured so that the fuel injection valves are clamped to the cylinder head by highly rigid clamping members, there is a problem in that the clamping force applied to the fuel injection valves can vary greatly according to the dimensional tolerances between the fuel injection valves themselves and the valve attachment holes in the cylinder head.

Furthermore, in the abovementioned conventional engine, although said dimensional tolerances are accommodated by elastic compression of the gasket, there is a limit to the amount of elastic compression in said gasket and it is difficult to fully accommodate large dimensional tolerances. Also, in the abovementioned conventional engine, the valve clamping members are configured as elastic bodies and elastic forces are exerted on the fuel injection valves by adjusting the amount by which the attachment bolts are screwed into the engine; however, adjusting these screw amounts generally requires precise torque control using a special tool with the resulting problem that the assembly work is inefficient.

Therefore, it is an objective of the invention to improve a direct injection type internal combustion engine as indicated above so as to enable a secure attachment and efficient assembly of the fuel injection valves and a fuel rail to a cylinder head.

The objective is solved according to the present invention by a direct injection type internal combustion engine having a fuel rail for supplying fuel to fuel injection valves inserted in valve attachment holes formed in a cylinder head, and a valve clamping member of an elastic material having a fixing part for fixing the valve clamping member to a valve attachment boss part of a cylinder head, and a clamp part for clamping a flange part of said injection valve to thereby fix the fuel injection valve on the cylinder head, wherein each fuel injection valve comprises a valve side positioning part and each valve attachment holes comprises a head side positioning part, wherein the clamp part is folded by a specific folding amount or inclined by a specific angle from the fixing part, wherein the valve attachment boss part of the cylinder head is positioned further outwardly by a height difference dimension at the cylinder head in a direction of an injection valve axis than the flange part of the injection valve, and the valve side positioning part directly contacts the head side positioning part when the fuel injection valve is fixed, wherein the valve clamping member is plastically deformable in the opposite direction to the direction of said folding, and the folding amount is set so that elastic deformation occurs when a tolerance of said difference dimension H is positive and plastic deformation occurs when it is negative.

Accordingly, the fuel injection valve can be attached to the cylinder head by inserting the fuel injection valve into a valve attachment hole and bringing the valve positioning part into contact with the head side positioning part, while the flange part of said fuel injection valve fixes a valve clamping member, which is made of thin sheet and is attached to the cylinder head, whereby said flange part is clamped at the folded clamp part below the fixing part of said valve clamping member, thus fixing the fuel injection valve to the cylinder. Therefore, dimensional tolerances between the flange part of the fuel injection valve and the attachment boss part of the cylinder head are accommodated by elastic deformation of the valve clamping member (leaf spring) which is made of a thin sheet.

Accordingly, the clamp part of said valve clamping member is subjected to plastic as well as elastic deformation so that when the dimensional tolerances are large the accommodation is afforded by both elastic and plastic deformation. Also, since the valve clamping member is made of thin sheet, excessive clamping forces do not act on the fuel injection valve even if the clamping force is increased so much that the thin sheet is subjected to plastic deformation.

Also, since excessive clamping forces do not act on the fuel injection valve even if the attachment bolt is tightened so much that plastic deformation occurs in the valve clamping member due to said dimensional tolerance, there is no need for the precise torque control needed when a conventional valve clamping member - which is highly rigid and is made of elastic material - is clamped to such a degree that a specific elastic force is obtained, and thus the assembly is made more convenient.

Additionally, since said valve clamping member is made of spring steel sheet having a clamp part which clamps about half the annular flange part of said fuel injection valve and a fixing part which extends radially out from said clamp part, and since said clamp part is folded toward said flange part with the amount of said folding being set so that elastic deformation occurs when the tolerance of said reference dimension is positive and plastic deformation also occurs when it is negative, said dimensional tolerance can be accommodated by plastic deformation as well as elastic deformation in said valve clamping member, and the fuel injection valve can be reliably fixed by a simple operation without having to perform precise torque control and without excessive clamping forces acting on the fuel injection valve.

Furthermore, since said valve clamping member is of a single-grip type, having a fixing part extending obliquely radially outward from one end of said clamp part, and since it is bolted to said valve attachment boss in such a way that it covers a washer member which has higher rigidity than said valve clamping member at said fixing part and which has an elongated part which extends to the other end of said clamp part, it is possible to save space by using a single-grip valve clamping member and it is possible to apply a uniform clamping force across said clamp part from one end to the other, and the fuel injection valve can be fixed more securely to the cylinder head.

Since said valve clamping member has fixing parts that extend radially out from said clamp part in a symmetrical fashion, the clamping force can be made to act even more uniformly over the whole of said clamp part, and the fuel injection valve can be securely fixed to the cylinder head.

Since said fuel injection valves are attached to the cylinder head roughly parallel with the air intake ports as seen in the direction of the camshaft and are positioned below said air intake ports with their injection nozzles opening into combustion recess parts, the stream of air introduced from the air intake ports and the stream of fuel introduced from the fuel injection valves flow in more or less the same direction - i.e. in directions along which intersection is suppressed - and accordingly mixing of the fuel and air is suppressed while stratification is promoted.

Also, since a spray recess part into which the fuel injected from said fuel injection valves is guided is formed at the head part of the pistons, and since said spray recess part is disposed offset toward said injection nozzle as seen in the direction of the camshaft and is formed with a shape that guides the injected fuel to the electrodes of a spark plug disposed roughly concentrically with the cylinder axis, a fuel mist of relatively high density is guided to the spark plug due to said stratification, and it is possible to stabilize the combustion of lean fuel/air mixes.

In addition since said spray recess part is formed with a roughly egg-shaped profile with the parts further forward in the injection direction being narrower than the parts to the rear as seen from the combustion cylinder side in the direction of the cylinder axis, the density of said injected fuel is increased by constricting it in said spray recess part at the front of said spray direction, and it is possible to achieve stable combustion with even leaner fuel/air mixes by guiding it to the spark plug in this state.

Accordingly, since the fuel injected toward the spray recess part from the fuel injection valve is smoothly guided into the spray recess part by an introduction surface comprising an inclined surface that is more or less parallel with the axis of said fuel injection valve, and is then guided to the electrode part of the spark plug above it by a bottom surface following on from said introduction surface where the front is slightly raised in the fuel injection direction, and a guide surface following on from said bottom surface which rises up after an intervening curved surface, it is possible to achieve stable combustion with lean fuel/air mixes even more reliably.

Moreover, since one of the two air intake ports is closed off when the engine is running with lean fuel/air mixes, air is only introduced through one of the air intake ports when running with low quantities of intake air, thus giving rise to swirl (transverse eddies) in the cylinder, and the fuel injected from said fuel injection valve toward the interior of said spray recess part is pressed by this swirl to the downstream side of the swirl inside said spray recess part, causing a further increase in the fuel density, and this high-density fuel is then guided to the spark plug so that stable combustion can be achieved with even leaner fuel/air mixes.

Since the cross sectional profile of said spray recess part parallel with the camshaft including the cylinder has left and right side walls that rise up roughly in the shape of circular arcs, it is possible to make the fuel that has been pressed to one side by said swirl concentrate inside the spray recess part, whereby the abovementioned stabilization of combustion of lean fuel/air mixes can be promoted to an even greater degree.

Further advantageous embodiments of the invention are laid down in the subclaims.

In the following, the invention is explained in greater detail by means of an embodiment making reference to the accompanying drawings, wherein:
- Figure 1: is a cross-sectional side view of an in-cylinder fuel-injected gasoline engine according to an arrangement embodying the present invention,
- Figure 2: is a front view as seen in the direction of arrow II in Figure 1,
- Figure 3: is a front view of just the cylinder head in Figure 1 as seen in the direction of arrow II,
- Figure 4: is a front view of the region around the fuel rail as seen in the direction of arrow IV in Figure 1,
- Figure 5: is a cross-sectional view along line V-V in Figure 2,
- Figure 6: is a cross-sectional view along line VI-VI in Figure 2,
- Figure 7: is a cross-sectional view along line VII-VII in Figure 2,
- Figure 8: is a schematic view showing the attachment of the fuel injection valves and fuel rail in a first arrangement of said engine, not being part of the present invention,
- Figure 9: is a schematic cross-sectional side view showing how fuel injection is performed in said engine,
- Figure 10: is a plan view of a piston in said engine,
- Figure 11: is a cross-sectional view along line XI-XI in Figure 10,
- Figure 12: is a plan view showing the attachment of the fuel injection valves in the above-mentioned first arrangement of Figure 8,
- Figure 13: is a cross-sectional side view showing the attachment of the fuel injection valves in the above-mentioned first arrangement,
- Figure 14: is a front view of an engine according to a second arrangement not being part of the invention,
- Figure 15: is a schematic cross-sectional side view showing the attachment of the fuel injection valves in the above-mentioned second arrangement,
- Figure 16: is a plan view of the leaf spring in the above-mentioned second arrangement,
- Figure 17: is a side view of the leaf spring in the above-mentioned second arrangement,
- Figure 18: is a front view as seen in the direction of arrow II in Figure 1,
- Figure 19: is a front view of just the cylinder head in Figure 1 as seen in the direction of arrow II,
- Figure 20: is a front view of the region around the fuel rail as seen in the direction of arrow IV in Figure 1,
- Figure 21: is a cross-sectional view along line VI-VI in Figure 18,
- Figure 22: is a schematic view showing the attachment of the fuel injection valves and fuel rail in said engine according to a third arrangement embodying the present invention,
- Figure 23: is a plan view showing the attachment of the fuel injection valves of the third arrangement,
- Figure 24: is a cross-sectional view showing the attachment of the fuel injection valves of the third arrangement,
- Figure 25: is a front view of a direct injection type internal combustion engine according to a fourth arrangment embodying the invention,
- Figure 26: is a schematic cross-sectional side view showing the attachment of the fuel rail and fuel injection valves in the above-mentioned fourth arrangement,
- Figure 27: is a plan view of the leaf spring for attaching fuel injection valves in the engine of the above-mentioned fourth arrangement,
- Figure 28: is a side view of the afore-mentioned leaf spring,
- Figure 29: is a front view of an in-cylinder fuel-injected engine according to a fifth arrangement not being part of the invention,
- Figure 30: is a cross-sectional view along line XV-XV in Figure 29, and
- Figure 31: is a cross-sectional view along line XVI-XVI in Figure 29.

In the figures, item 1 is a water-cooled four-stroke in-line 3-cylinder four-valve engine, and this engine 1 is mainly constructed with a cylinder head 3 and a head cover 4 stacked on top of a cylinder block 2, with pistons 5 inserted with freedom to slide in bore holes 2a in cylinder block 2, and the pistons 5 linked to a crankshaft (not illustrated) by con rods 6.

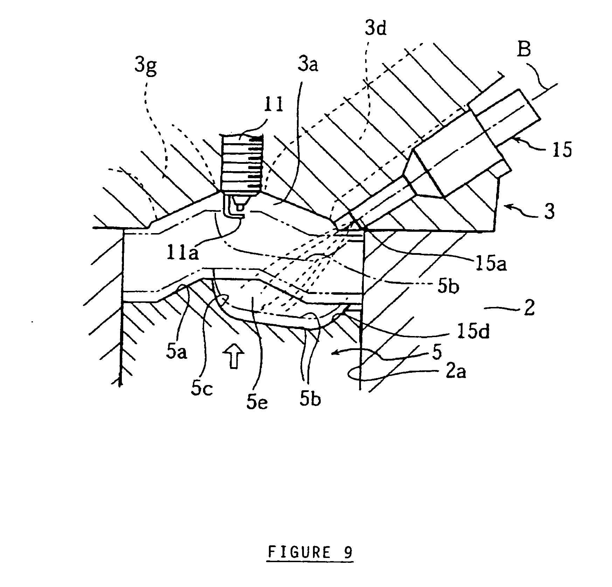

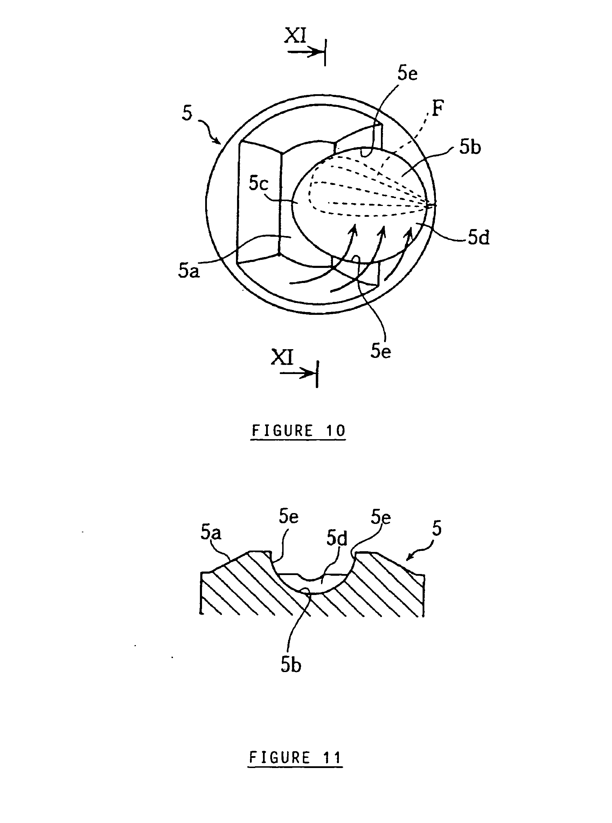

As shown in Figures 9 to 11, the head part 5a of said pistons 5 is made to protrude into a pentroof shape, and a spray recess part 5b into which the fuel is injected from a fuel injection valve 15 (described later) is formed in the head part 5a. This spray recess part 5b is formed with a roughly egg-shaped profile in plan view (Figure 10) with the parts further forward in the injection direction (to the left of the figure) being narrower than parts further to the rear in the injection direction (to the right of the figure).

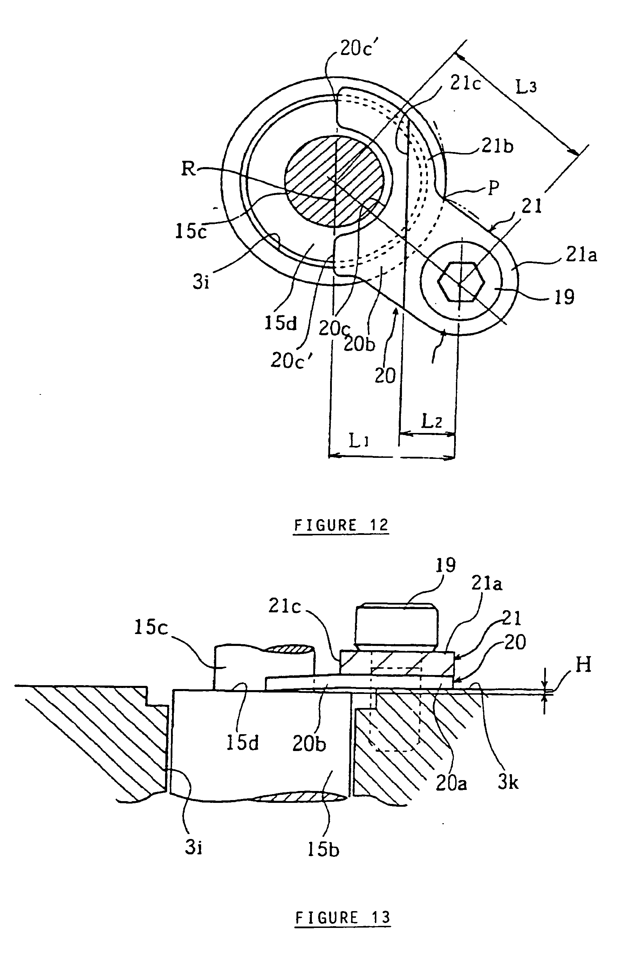

Also, when said spray recess part 5b is viewed in cross section (Figure 9) along a direction perpendicular to the camshaft including the cylinder axis and fuel injection valve, its shape consists of an introduction surface 5d comprising a sloping surface that is roughly parallel to the axis B of said fuel injection valve 15, an inclined bottom surface which follows on from said introduction surface 5d and rises slightly toward the front in the fuel injection direction, and a guide surface 5c which follows on from said bottom surface and rises up vertically after an intervening curved surface having a relatively large R. Furthermore, when said spray recess part 5b is viewed in a cross section plane (Figure 11) parallel with the camshaft and including the cylinder axis, it forms a roughly semicircular shape having left and right side walls 5e, 5e which stand erect.

When the engine is idling, fuel is injected as piston 5 rises from the position shown by the solid line in Figure 9 - i.e. about 60° (crank angle) before top dead center during the compression stroke - to around the position shown by the single-dot chain line (about 55° before top dead center). When said piston 5 reaches top dead center as shown by the two-dot chain line in the same figure, said head part 5a is positioned inside said combustion recess part 3a, and the electrodes 11a of spark plug 11 are positioned inside spray recess part 5b of said head part 5a

Thus in the present arrangement, not being part of the present invention, said fuel injection valve 15 is attached to the cylinder head so that it is positioned below said air intake port 3d and roughly parallel to air intake port 3d as seen in the direction of the camshaft, and fuel injection nozzle 15a opens into combustion recess part 3a, so that the stream of air introduced from air intake port 3d and the stream of fuel injected from fuel injection valve 15 flow in roughly the same direction - i.e. in a direction along which intersection is suppressed - and thus stratification is promoted by suppressing mixing of the air and fuel.

Also, since said spray recess part 5b into which the fuel F injected from said fuel injection valve 15 is guided is formed in the head part 5a of piston 5, and since this spray recess part 5b is displaced toward said injection nozzle 15a as viewed in the camshaft direction and is formed with a shape whereby the injected fuel is guided to electrodes 11a of spark plug 11 positioned roughly concentrically with the cylinder axis, a fuel mist whose density is made relatively high due to said stratification is guided to the spark plug electrodes 11a, and as a result stable combustion can be achieved with lean fuel/air mixes.

Specifically, said spray recess part 5b is formed with a roughly egg-shaped profile as viewed along the cylinder axis from the side of the combustion chamber, with the parts further forward in the injection direction (to the left of Figure 10) being narrower than the parts to the rear in the injection direction (to the right of Figure 10), the concentration of said injected fuel F is increased by constricting it at the tip of said spray recess part 5b in the injection direction, and stable operation can be achieved with even leaner fuel/air mixes by guiding the fuel to spark plug 11 in this state.

Also, the fuel F injected toward spray recess part 5b from said fuel injection valve 15 is smoothly guided into spray recess part 5b by introduction surface 5d comprising a sloping surface that is roughly parallel to the axis B of said fuel injection valve 15, and is then guided - by a subsequent bottom surface which rises slightly to the front of the injection direction and by said guiding surface 5c which rises vertically after an intervening curved surface of large radius R which follows the bottom surface - to the electrodes 11a of spark plug 11 situated above it, and as a result it is possible to achieve stable combustion with even leaner fuel/air mixes.

Furthermore, in the present arrangement, one of the pair of intake ports 3d on the left and right sides, preferably the left air intake port 3d of the two air intake ports 3d is closed off by a switching valve 13a (described below) when running with low quantities of intake air such as during idling, so that air is only introduced through the right air intake port 3d, thus giving rise to counterclockwise swirl (eddy, transverse eddies) in the cylinder as shown by the arrows in Figure 10, whereby the fuel F injected from said fuel injection valve 15 toward the interior of spray recess part 5b is pressed by this swirl to the downstream side of the swirl inside said spray recess part 5b. In this case, the fuel F that is pressed to one side by said swirl is concentrated inside spray recess part 5b by the right side wall 5e (the side wall to the top of Figure 10) which rises up from spray recess part 5b, and this pressing allows concentrated fuel to be guided to spark plug 11, thereby providing further assistance to achieving stable combustion with lean fuel/air mixes.

Said combustion recess part 3a - which, along with head part 5a of piston 5, constitutes the combustion chamber - is formed at the mating surface of said cylinder head 3 where it meets the cylinder block. Two air intake valve openings 3b and two exhaust valve openings 3c are formed in this combustion recess part 3a. The air intake valve opening 3b is guided out to a front wall 3e of cylinder head 3 by said air intake port 3d, and said exhaust valve opening 3c is guided out to a rear wall 3g by an exhaust port 3f.

Said air intake port 3d extends forward and upward so that its axis Ci forms a clockwise angle of 40 to 60° with respect to the cylinder axis C, and said exhaust port 3f extends roughly horizontally so that its axis Ce forms a counterclockwise angle of 75 to 95° with respect to the cylinder axis C.

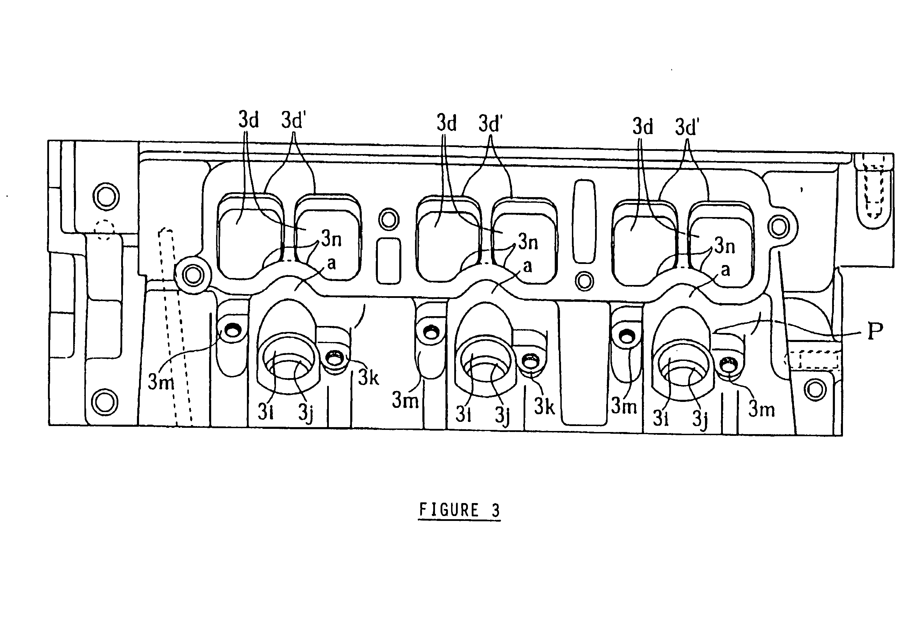

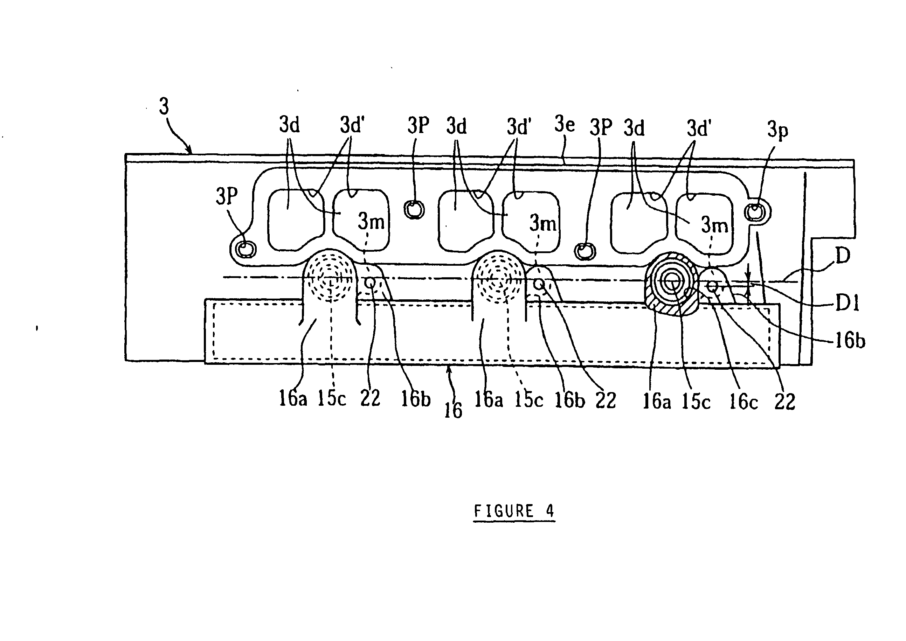

An air intake system 13 is connected to an external connection hole 3d' of said air intake port 3d, and an exhaust system 14 is connected to an external connection hole 3g' of said exhaust port 3g. Said air intake system 13 is configured by connecting a connecting duct 13b - which incorporates said switching valve 13a that opens and closes the air intake port 3d on the left side as seen from the front of the vehicle - to said external connection hole 3d', and by then sequentially connecting an air intake pipe 13c, a surge tank 13d and an air cleaner (not illustrated) thereto. In Figure 4, 3p is a bolt hole for fixing the connecting duct 13b. Also, said exhaust system 14 is configured by connecting parts such as an exhaust manifold 14a, exhaust pipe 14b and a muffler (not illustrated) to said external connection hole 3g'.

Also, an air intake valve 7 is disposed in each of the said air intake valve openings 3b and an exhaust valve 8 is disposed in each of said exhaust valve openings 3c; said air intake valve 7 and exhaust valve 8 are opened and closed by an air intake valve operating mechanism 9 and an exhaust valve operating mechanism 10. Said air intake and exhaust valve mechanisms 9 and 10 are configured so that the air intake valves 7 and exhaust valves 8 are pushed home by valve springs 9a and 10a and are opened and closed by air intake and exhaust camshafts 9c and 10c via lifters 9b and 10b fitted at the top end thereof.

A fuel supply device 12 in this engine 1 is equipped with a fuel supply system comprising fuel injection valves 15 - one of which is fitted in each cylinder -, a single fuel rail 16 which is shared by each of the three fuel injection valves 15, and a high-pressure fuel pump 27 and fuel ducts (not illustrated) which supply high-pressure fuel to this fuel rail 16.

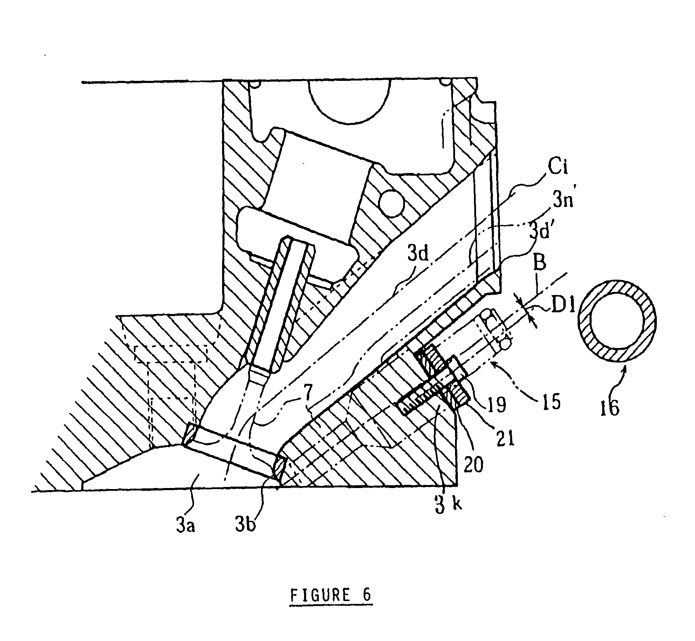

As shown in Figure 6, said fuel injection valves 15 are disposed at the center (boundary part) of the left and right air intake ports 3d, 3d in the direction of the camshaft as seen from the front of the vehicle, and when viewed along the direction of the camshaft, their axis B is disposed roughly parallel with the axis Ci of said air intake port 3d and closer toward axis Ci of air intake port 3d. In other words, the parts nearer the boundary of the bottom wall of left and right air intake ports 3d, 3d is formed so as to cut into the interior of the air intake port, and said fuel injection valve 15 is disposed in a space a obtained by providing this cutin part 3n.

In the present arrangement, since a configuration is adopted whereby the fuel injection valves 15 are displaced toward the air intake ports 3d, it is possible to dispose the fuel injection valves 15 roughly parallel with the air intake ports 3d while making the configuration of cylinder head 3 around the fuel injection valves more compact, and the injection nozzles can be made to face into said combustion recess parts 3a. Also, this parallel placement of fuel injection valves 15 and air intake ports 3d allows the fuel and air to flow into the interior of the cylinders in the same direction, whereby stratification of the fuel and air can be achieved and stable combustion with a lean fuel/air mixture is made possible.

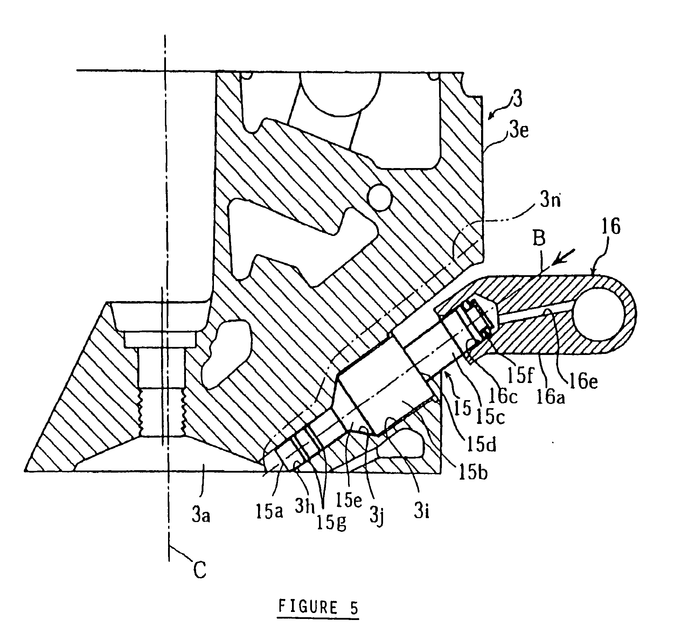

As shown in Figure 5, said fuel injection valves 15 comprise a slender cylindrical nozzle part 15a having an injection outlet, a wide cylindrical main body part 15b which accommodates a solenoid or the like, and a cylindrical fuel introduction part 15c to which said fuel rail 16 is connected..Also, the step part between said wide main body part 15b and said introduction part 15c constitutes a flange part 15d for clamping the fuel injection valve 15 onto the engine, and a tapering valve side positioning part 15e is formed at the boundary part between said main body part 15b and the nozzle part 15a.

Said nozzle part 15a is inserted into a nozzle hole 3h which opens into said combustion recess part 3a of the valve attachment hole formed in cylinder head 3; the tip thereof is positioned near the interior surface of combustion recess part 3a, and the gap between nozzle part 15a and nozzle hole 3h is sealed by a sealing ring 15g. Furthermore, said main body part 15b is inserted into a part of retaining hole 3i of said valve attachment hole, and valve side positioning part 15e comes into contact with a head side positioning part 3j which has the shape of a tapering hole formed in the cylinder head, whereby it is positioned inside the valve attachment hole of fuel injection valve 15 and the combustion pressure is prevented from escaping to the outside.

Said fuel rail 16 has the shape of a round pipe which extends parallel with the camshaft, and the fuel introduction part 15c of fuel injection valve 15 is disposed to the front of said fuel injection valve 15 as viewed in the direction of axis B of fuel injection valve 15 (see Figure 4), and is separated from it by a sufficient gap so as not to be hidden below fuel rail 16.

As in Figure 5, three fuel supply parts 16a and three supporting stay parts 16b are integrally formed in said fuel rail 16. Said fuel supply parts 16a extend rearward toward the front wall 3e of the engine so as to cover the fuel introduction part 15c of said fuel injection valves 15, an interlocking hole 16c formed in the extended end part of fuel supply part 16a is interlocked with the fuel introduction part 15c of fuel injection valve 15, and the gap between introduction part 15c and interlocking hole 16c is sealed by an O-ring 15f. Note that item 16e is a connecting hole which connects fuel rail 16 with said interlocking hole 16c.

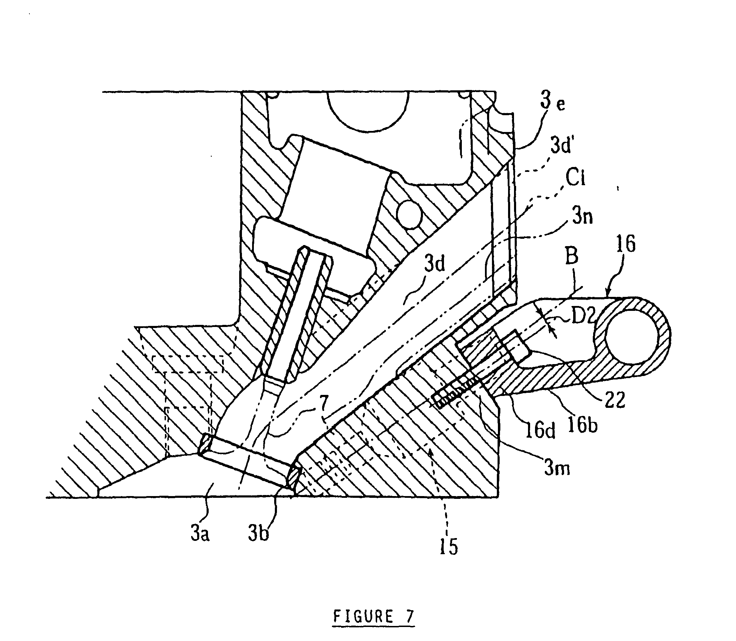

As shown in Figures 5 to 8, said supporting stay parts 16b extend rearward toward the front wall 3e of the engine, and the flange parts 16d at the tips of these supporting stay parts 16b are secured and fixed to rail attachment boss parts. Fuel injection valves 15 are clamped to cylinder head 3 by leaf springs 20.

With an in-cylinder fuel-injected gasoline engine 1, according to a first arrangement, not being part of the present invention, as viewed in the direction of the fuel injection valve axis B, since said fuel rail 16 is disposed offset toward the opposite side of air intake port 3d astride fuel injection valve 15 and the rail attachment boss part 3m on the side of cylinder head 3 is formed at a part facing outwards from between air intake port 3d and fuel rail 16, the position of fuel injection valve 15 and the attachment position of fuel rail supporting stay part 16b on the side of the cylinder head come to more or less the same position in the direction perpendicular to the axis of fuel rail 16, whereby the bending moment resulting from the reaction to the fuel pressure is decreased and it is possible to avoid problems such as increased mass in order to increase the rigidity in parts of supporting stay 16b.

Also, since the positions of supporting stay 16b and fuel injection valve 15 in the direction perpendicular to the axis from fuel rail 16 are approximately the same, it is possible to make do with less space for supporting stay 16b and fuel injection valve 15 in said direction perpendicular to the axis, and the freedom of layout can be increased - for example fuel injection valve 15 can be disposed roughly parallel with air intake port 3d and adjacent to this air intake port 3d while making the region of cylinder head 3 surrounding fuel injection valves 15 more compact.

Also, as viewed in the direction of fuel injection valve axis B, since a rail attachment boss part 3m for bolting fuel rail 16 to cylinder head 3 is fitted on one side of fuel injection valve 15 and a valve attachment boss part 3k for bolting and fixing said fuel injection valve 15 to cylinder head 3 is fitted on the other side, and since these parts are made to face outwards from between air intake port 3d and fuel rail 16, the operation of attaching fuel rail 16 can be made easier without fuel rail 16 itself getting in the way. It is also possible to make do with less space in the direction perpendicular to the fuel rail for the whole of valve attachment boss parts 3k, fuel injection valves 15 and the supporting stays 16b of fuel rail 16, whereby the parts of cylinder head 3 around the fuel injection valves 15 can be made more compact while increasing the layout freedom of fuel injection valves 15.

Also, since space a is provided so as to cut into the interior of air intake port 3d at the boundary part of the pair of air intake ports 3d, 3d on the left and right sides, and said fuel injection valve 15 is inserted into and disposed in this space a, fuel injection valve 15 can be disposed roughly parallel with air intake port 3d while making the parts of cylinder head 3 around fuel injection valve 15 more compact, and as mentioned above this has the result of facilitating stratification of the air and fuel by supplying the air and fuel into the cylinder in the same direction, thereby making it possible to achieve stable combustion with lean fuel/air mixes and providing for improved fuel economy and cleaner exhaust emissions.

Also, since said rail attachment boss parts 3m are made to project in the direction of said fuel injection valve axis B, the length of supporting stays 16b of said fuel rail 16 can be reduced in the direction of said fuel injection valve axis B, whereby parts of supporting stays 16b can be reduced in weight while their rigidity can be increased.

Also, since fuel rail attachment bolts 22 and fuel injection valve attachment bolts 19 are screwed in along a direction parallel with said fuel injection valve axis B, it is possible to avoid problems such as tools hitting fuel rail 16 when these bolts 22, 19 are screwed in, and the assembly operation can be further improved.

As shown in Figures 12 and 13, when a fuel injection valve 15 is inserted into retaining hole 3i in cylinder head 3 and valve side positioning part 15e is brought into contact with head side positioning part 3j, the dimension H of the difference in height between said flange part 15d of main body part 15b and the valve attachment boss part 3k on the side of cylinder head 3 is brought to a standard dimension within a certain tolerance either way, although it can fluctuate slightly from one engine to another due to process deviations. In a first arrangement, not being part of the present invention, a leaf spring 20, which is part of a valve clamping member 18, is then clamped into place on said valve attachment boss part 3k by an attachment bolt 19, covering washer member 21, and the left and right tip parts 20c' of this leaf spring 20 press against said flange part 15d, whereby fuel injection valve 15 is fixed to cylinder head 3.

Said leaf spring 20 and washer member 21 are fixed by soldering, and said washer member 21 is made of highly rigid steel sheet of greater thickness than leaf spring 20 (preferably with a sheet thickness of at least 3 mm), and has a fixing part 21a which is fixed by bolt 19, and an elongated part 21b for applying a clamping force uniformly to the left and right tip parts 20c', 20c' of the contacting edge 20c of said leaf spring 20 which is formed in the shape of a circular arc.

It is also possible to employ a method where said leaf spring 20 and washer member 21 are not soldered, thereby allowing the soldering process to be dispensed with. When this method is employed, a projecting part P is formed in cylinder head 3 for alignment purposes as shown by the two-dot chain line in Figure 9, and the tip part 20c' (the part that comes into contact with the flange part) of clamp part 20b of leaf spring 20 can thereby easily be positioned at the correct position (a point on the line R through the center of the fuel injection valve) on flange part 15d of fuel injection valve 15.

Said leaf spring 20 is made of spring steel sheet with a thickness of 0.5 to 3.0 mm, preferably 1.5 mm, and it is equipped with a fixing part 20a which has the same shape as said washer member 21 in plan view and a clamping part 20b which projects forward from washer member 21. Said clamping part 20b of said leaf spring 20 is bent down along the line of the tip edge 21c of said washer member 21. The amount A of said curvature in clamping part 20b is set so that elastic deformation occurs in leaf spring 20 when fuel injection valve 15 is fixed in the normal state by said leaf spring 20 and the dimension H of the difference in height between flange part 15d of said fuel injection valve 15 and the valve attachment boss part 3k on the side of the cylinder head swings toward the side of (standard dimension plus tolerance), i.e. when said difference dimension H has become larger then the standard dimension, and leaf spring 20 is subjected to both elastic and plastic deformation when said difference dimension H swings toward the side of (standard dimension minus tolerance), i.e. when said difference dimension H has become smaller than the standard dimension. Fuel injection valve 15 can thereby be securely fixed to the engine by accommodating the abovementioned dimensional tolerance, and since leaf spring 20 in the first embodiment is made of a thin sheet with a thickness of about 0.5 to 3.0 mm, it does not apply an excessive clamping force that would damage fuel injection valve 15, even if leaf spring 20 is tightened to such a degree that said plastic deformation occurs.

Note that the abovementioned amount A of curvature in said leaf spring 20 can also be set so that plastic deformation occurs in addition to elastic deformation in said leaf spring 20 when the abovementioned difference dimension H swings toward the side of (standard dimension plus tolerance), i.e. when said difference dimension H has become larger than the standard dimension. The present invention also includes the setting of the amount of curvature in this way.

In the first arrangement, said amount of curvature A is specifically set in the following way, for example. That is, when said fuel injection valves 15 are inserted into retaining holes 3i and the valve side positioning part 15e is brought into contact with the head side positioning part 3j, the dimension H of the difference in height between flange part 15d and valve attachment boss part 3k is kept within a standard dimension of 0.3 mm, plus or minus a tolerance of 0.3 mm. Also, said amount of curvature A is set to 0.95 ±0.25 mm. Accordingly, said difference dimension H becomes 0 mm when it has swung to its largest negative value, in which case leaf spring 20 is deformed by about 0.95 mm and is subjected to a plastic deformation of about 0.4 mm. Note that the dimensions L1, L2 and L3 in Figure 12 are - for example - set to approximately 16, 7 and 20 mm respectively.

With an in-cylinder fuel-injected gasoline engine 1, according to a first arrangement, not being part of the present invention, fuel injection valves 15 are attached to cylinder head 3 by inserting fuel injection valves 15 into the valve attachment holes and bringing the valve side positioning parts 15e into contact with the head side positioning parts 3j, and the flange parts 15d of said fuel injection valves 15 are fixed by clamping them with leaf springs 20 which are made of thin sheet and are attached to cylinder head 3 - and tightening attachment bolts 19 In this case, the dimensional tolerance between the flange parts 15d of fuel injection valves 15 and the valve attachment boss parts 3k of cylinder head 3 are accommodated by elastic deformation of thin sheet leaf springs 20, and when said dimensional tolerance is large it is accommodated by plastic deformation of said leaf springs 20 in addition to elastic deformation. And since said leaf spring 20 is made of a thin sheet, excessive clamping forces do not act on the fuel injection valves even if the clamping force is increased to such a degree that said thin sheet is subjected to plastic deformation.

Also, since no problems arise even when leaf spring 20 is tightened by attachment bolt 19 to such a degree that plastic deformation occurs according to the abovementioned dimensional tolerance, there is no need to perform precise torque control as in the conventional case where a highly rigid valve clamping member made of an elastic material is clamped to achieve a prescribed elastic force, and thus the assembly operation is made easier.

For example, in the present arrangement, said leaf springs 20 are made of spring steel sheet with a thickness of 1.0 to 3.0 mm and said reference dimension is set to 0.3 mm so that flange parts 15d become lower than valve attachment boss parts 3k, in which case said difference H becomes smaller than the reference dimension (e.g. 0 mm) when said tolerance has become negative (e.g. -0.3 mm), and when said leaf springs 20 are clamped by tightening attachment bolts 19, said leaf springs 20 (which are made of thin sheet) are not only elastically deformed but are also subjected to about 0.4 mm of plastic deformation, so that fuel injection valves 15 can be securely fixed to cylinder head 3 by a simple operation without performing precise torque control and without subjecting them to excessive clamping forces.

Also, in the present arrangement, since said leaf springs 20 are of a single-grip type, having a fixing part 20a extending obliquely radially outward from one end of said clamp part 20b, and since they are secured by bolts 19 to said valve attachment boss parts 3k in such a way that they cover washer members 21 which have higher rigidity than said leaf springs 20 at said fixing part 20a and which have an elongated part which extends to the other end of said clamp part 20b, it is possible to save space by using single-grip leaf springs 20 and it is possible to apply a uniform clamping force to both tip parts 20c', 20c' of said clamp part 20b from one end to the other, and the fuel injection valves 15 can be securely fixed to cylinder head. 3

Also, in the present arrangement, as viewed in the direction of fuel injection valve axis B, since said fuel rail 16 is disposed offset toward the opposite side of air intake ports 3d astride fuel injection valves 15 and the rail attachment boss part 3m on the side of cylinder head 3 is formed at a part facing outward from between air intake port 3d and fuel rail 16, the positions of fuel injection valves 15 more or less coincide with the attachment position of fuel rail supporting stay 16b on the side of the cylinder head in the direction perpendicular to the axis of fuel rail 16, whereby the bending moment resulting from the reaction to the fuel pressure is decreased and it is possible to avoid problems such as increased mass in order to increase the rigidity in parts of supporting stay part 16b.

Also, since the positions of supporting stay 16b and fuel injection valve 15 in the direction perpendicular to the axis from fuel rail 16 are approximately the same, it is possible to make do with less space for supporting stay 16b and fuel injection valves 15 in said direction perpendicular to the axis, and the freedom of layout can be increased - for example fuel injection valves 15 can be disposed roughly parallel with air intake ports 3d and adjacent to these air intake ports 3d while making the region of cylinder head 3 surrounding fuel injection valves 15 more compact.

Also, since fuel injection valves 15 can be disposed roughly parallel with air intake ports 3d, stratification of the fuel and air can be promoted by introducing the fuel and air into the cylinders in the same direction, allowing stable combustion to be achieved with lean fuel/air mixtures.

Also, as seen in the direction of fuel injection valve axis B, since rail attachment boss parts 3m for bolting fuel rail 16 to cylinder head 3 are fitted on one side of fuel injection valves 15 and valve attachment boss parts 3k for bolting said fuel injection valves 15 to cylinder head 3 are fitted on the other side, and since they are made to face outward from between air intake port 3d and fuel rail 16, the operation of attaching fuel rail 16 can be made easier without fuel rail 16 itself getting in the way. Also, less space is needed in the direction perpendicular to the fuel rail axis for the placement of the supporting stay 16b of fuel rail 16, fuel injection valves 15 and the whole of valve attachment boss parts 3k, thereby allowing the region of cylinder head 3 surrounding fuel injection valves 15 to be made more compact while increasing the layout freedom of fuel injection valves 15.

Also, since space a is provided so as to cut into the interior of air intake ports 3d at the boundary part of the pair of air intake ports 3d, 3d on the left and right sides, and said fuel injection valves 15 are inserted into and disposed in this space a, fuel injection valves 15 can be disposed roughly parallel with air intake ports 3d while making the parts of cylinder head 3 around fuel injection valves 15 more compact, stratification of the air and fuel can be promoted by supplying the air and fuel into the cylinders in the same direction, and it is thereby possible to achieve stable combustion with lean fuel/air mixtures which provides for improved fuel economy and cleaner exhaust emissions.

Also, since sail rail attachment boss parts 3m are made to project in the axial direction of said fuel injection valves, it is possible to reduce the length of supporting stay 16b on the side of said fuel rail 16 in the axial direction of said fuel injection valves, and it is possible to increase the rigidity while achieving weight reductions in parts of said supporting stay 16b.

Also, since fuel rail attachment bolts 22 and fuel injection valve attachment bolts 19 are screwed in along a direction parallel with said fuel injection valve axis, it is possible to avoid problems such as tools hitting fuel rail 16 when these bolts 22, 19 are screwed in, and the assembly operation can be further improved.

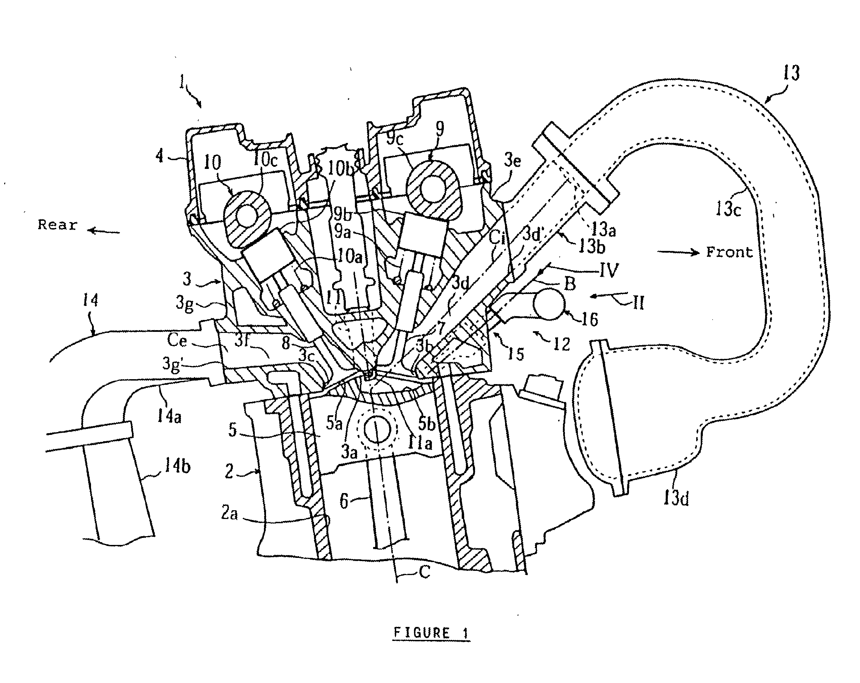

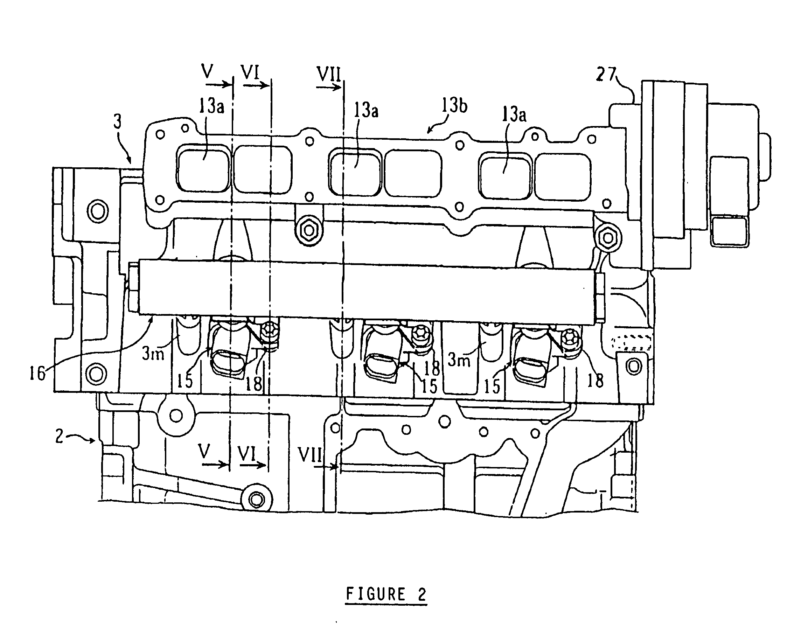

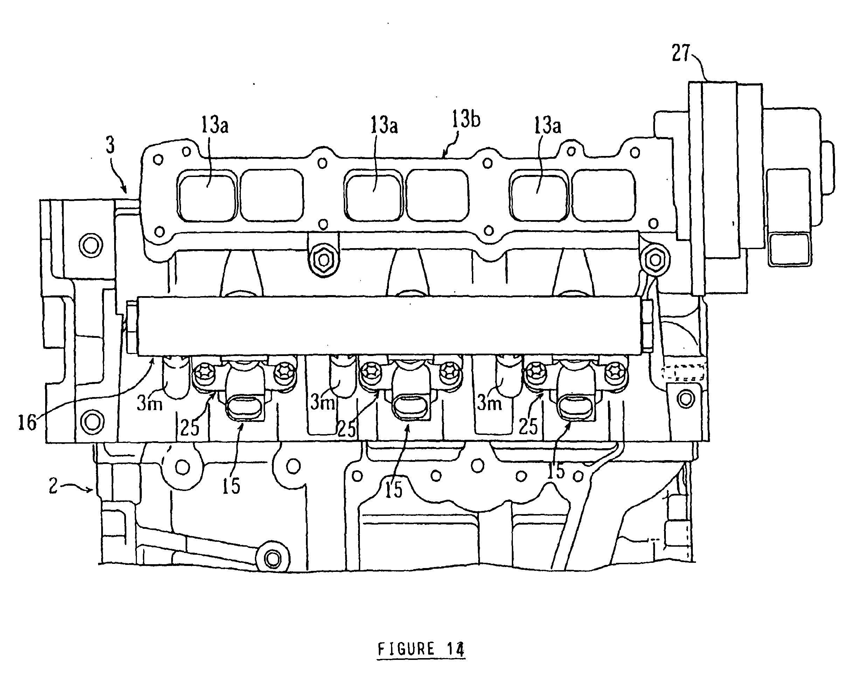

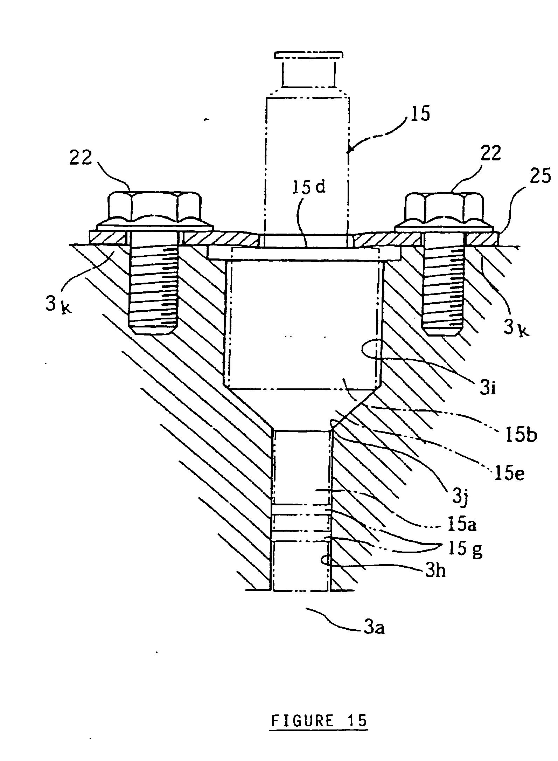

Figures 14 through 17 illustrate a second arrangement, not being part of the present invention, relating to another kind of valve clamping member, wherein leaf springs are provided having a pair of fixing parts on the left and right, and in these figures parts that are identical or correspond to those in Figures 1 through 13 are shown with the same reference numerals.

In the second arrangement, the flange parts 15d of fuel injection valves 15 are clamped by a single leaf spring 25. This leaf spring 25 is made of spring steel sheet with a thickness of 0.5 to 3.0 mm, preferably 1.5 mm, and is equipped with a pair of left and right fixing parts 25a, 25a and a clamp part 25b situated between these fixing parts 25a, 25a. This clamp part 25b is folded down at a fold line n. The amount of abovementioned folding A of said clamp part 25b is set so that elastic deformation occurs in said leaf spring 25 when fuel injection valve 15 is fixed in the normal state by said leaf spring 25 and the dimension H of the difference in height between flange part 15d of said fuel injection valve 15 and the valve attachment boss part 3k on the side of the cylinder head swings toward the side of (standard dimension plus tolerance), i.e. when said difference dimension H has become larger then the standard dimension, and said leaf spring 25 is subjected to both elastic and plastic deformation when said difference dimension H swings toward the side of (standard dimension minus tolerance), i.e. when said difference dimension H has become smaller than the standard dimension. Fuel injection valve 15 can thus be securely fixed to the engine without causing any damage to the fuel injection valve itself.

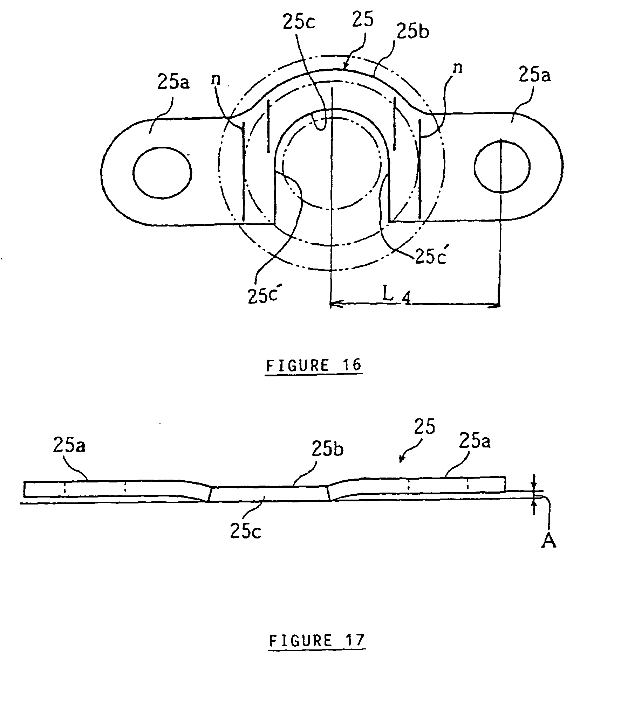

In the present arrangement, said amount of curvature A is specifically set in the following way, for example. That is, when said fuel injection valves 15 are inserted into retaining holes 3i and the valve side positioning parts 15e are brought into contact with the head side positioning parts 3j, the dimension H of the difference in height between flange parts 15d and valve attachment boss parts 3k is set so as to keep it within a standard dimension of 0.3 mm, plus or minus a tolerance of 0.3 mm. Also, said amount of curvature A is set to 0.95 ±0.25 mm. Accordingly, said difference dimension H becomes 0 mm when it has swung to its largest negative value, in which case leaf springs 25 are thus deformed by about 0.95 mm and are subjected to a plastic deformation of about 0.4 mm. Note that the dimension L4 in Figure 16 is - for example - set to approximately 20 mm.

In this second arrangement, as in the abovementioned first arrangement, the dimensional tolerance between the flange parts 15d of fuel injection valves 15 and the valve attachment boss parts 3k of cylinder head 3 can be accommodated by elastic deformation followed by plastic deformation of leaf springs 25, excessive clamping forces do not act on the fuel injection valves, and precise torque control is unnecessary, making the assembly operation more efficient.

Also, in the second embodiment, since the pair of fixing parts 25a on the left and right of leaf springs 25 are bolted down, the clamping force can be made to act even more uniformly over flange parts 15d of fuel injection valves 15 from both tip parts 25c' of clamp edge parts 25c of said leaf springs 25, and fuel injection valves 15 can be securely fixed to cylinder head 3.

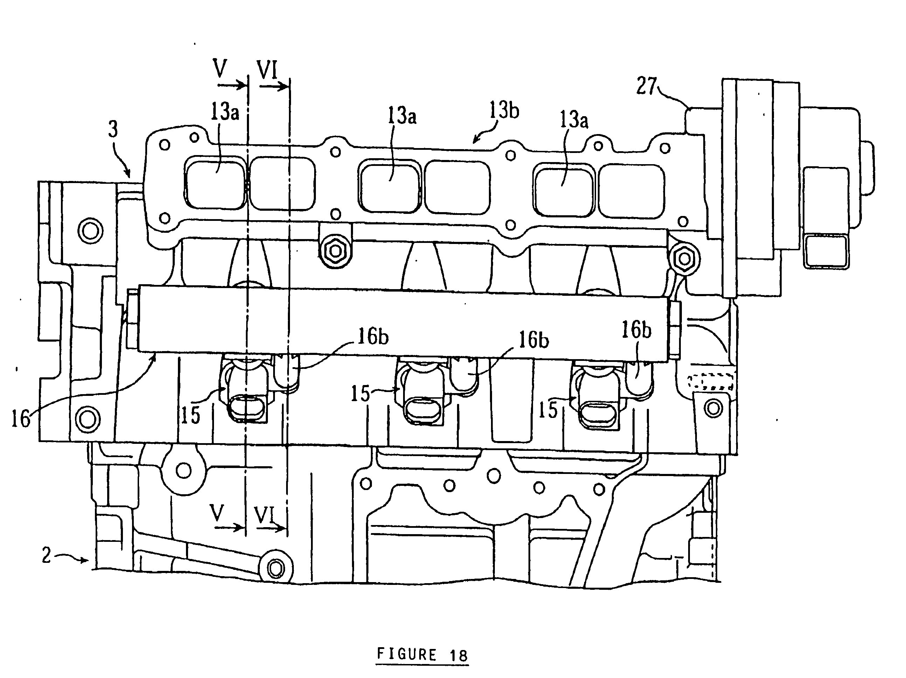

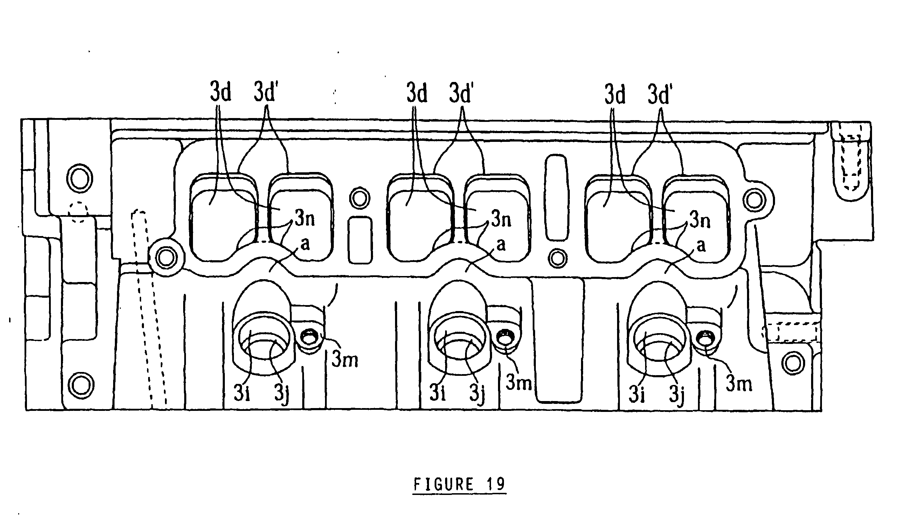

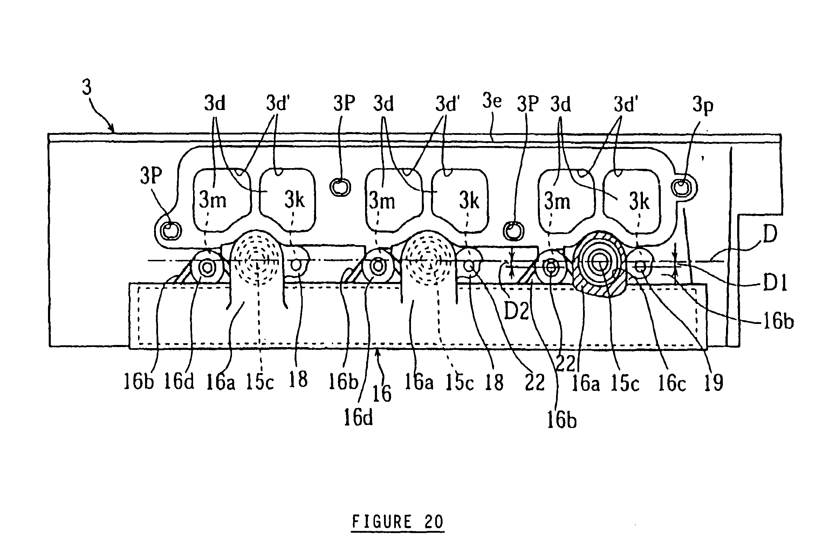

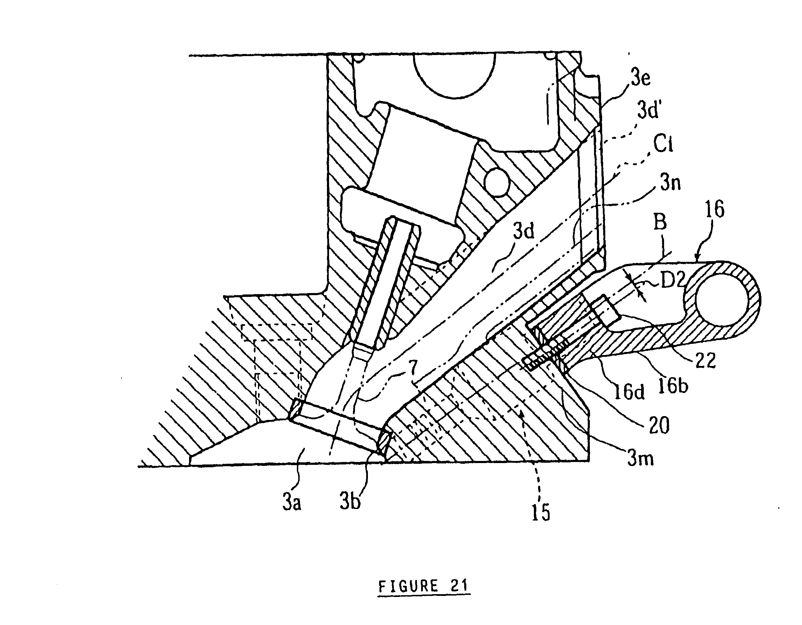

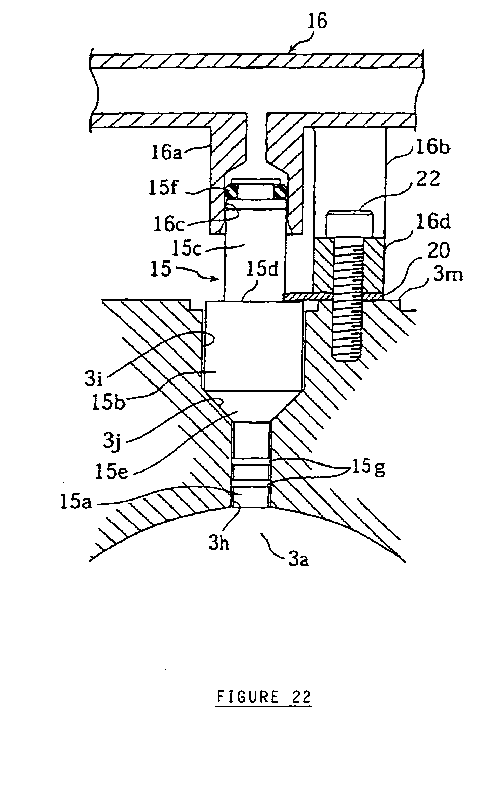

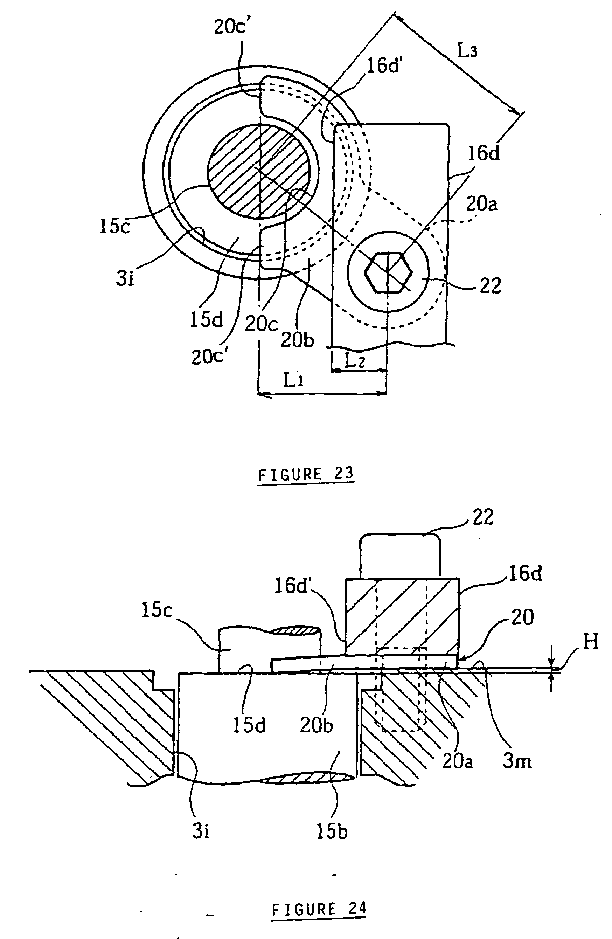

In a third arrangement embodying the present invention, as shown in Figures 18 to 24, same parts have the same reference numerals as above and mainly the differences, to the first two arrangements, are described hereafter.

Here, when a fuel injection valve 15 is inserted into retaining hole 3i in cylinder head 3 and valve side positioning part 15e is brought into contact with head side positioning part 3j, the dimension H of the difference in height between said flange part 15d of main body part 15b and the rail attachment boss part 3m on the side of cylinder head 3 is brought to a standard dimension within a certain tolerance either way, although it can fluctuate slightly from one engine to another due to process deviations. Then as mentioned above, said leaf spring 20 is clamped against said rail attachment boss part 3m as a valve clamping member, and the left and right tip parts 20c' of the peripheral part 20c of the tip of this leaf spring 20 press against said flange part 15d, whereby fuel injection valve 15 is fixed to cylinder head 3.

Said leaf spring 20 is clamped by flange part 16d of said supporting stay part 16b, and since the flange part 16d is highly rigid, a uniform clamping force is made to act upon it by the left and right tip parts 20c', 20c' of the peripheral part 20c formed in the shape of an arc at the tip of said leaf spring.20.

In said third arrangement, embodying the present invention, said leaf spring 20 is made of spring steel sheet with a thickness of 0.5 to 3.0 mm, preferably 1.5 mm, and it is equipped with a fixing part 20a which is clamped by said flange part 16d in plan view and a clamping part 20b which projects forward from flange part 16d. Said clamping part 20b of said leaf spring 20 is bent down along the line of the tip edge 16d' of flange part 16d. The amount A of said curvature in clamping part 20b is set so that elastic deformation occurs in leaf spring 20 when the dimension H of the difference in height between flange part 15d of said fuel injection valve 15 and the rail attachment boss part 3m on the side of the cylinder head swings toward the side of (standard dimension plus tolerance), i.e. when said difference dimension H has become larger then the standard dimension, and leaf spring 20 is subjected to both elastic and plastic deformation when said difference dimension H swings toward the side of (standard dimension minus tolerance), i.e. when said difference dimension H has become smaller than the standard dimension. Fuel injection valve 15 can thereby be securely fixed to the engine, and since leaf spring 20 in the present embodiment is made of a thin sheet with a thickness of about 0.5 to 3.0 mm, it does not apply an excessive clamping force that would damage fuel injection valve 15, even if leaf spring 20 is tightened to such a degree that the abovementioned plastic deformation occurs.

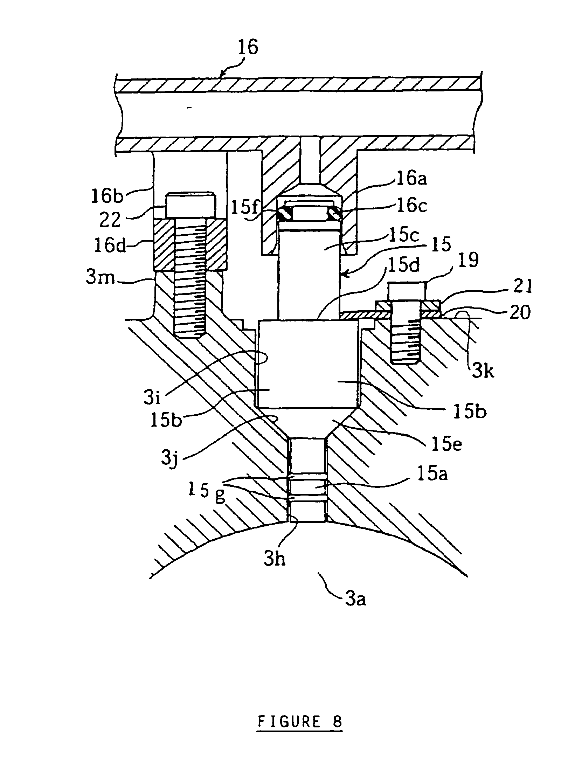

In the present embodiment, the abovementioned amount of curvature A is specifically set in the following way, for example. That is, when said fuel injection valve 15 is inserted into retaining hole 3i and the valve side positioning part 15e is brought into contact with the head side positioning part 3j, the dimension H of the difference in height between flange part 15d and rail attachment boss part 3m is kept within a standard dimension of 0.3 mm, plus or minus a tolerance of 0.3 mm. Also, the abovementioned amount of curvature A is set to 0.95 ±0.25 mm. Accordingly, said difference dimension H becomes 0 mm when it has swung to its largest negative value, in which case leaf spring 20 is deformed by about 0.95 mm and is subjected to a plastic deformation of about 0.4 mm. Note that the dimensions L1, L2 and L3 in Figure 8 are set to approximately 16, 7 and20 mm respectively.

With an in-cylinder fuel-injected gasoline engine relating to the present embodiment, since leaf spring 20 - which fixes the fuel injection valves - is gripped in place by flange part 16d of supporting stay part 16b of fuel rail 16 and rail attachment boss part 3m of cylinder head 3, it is possible to do away with a dedicated boss part for fixing the fuel injection valves, allowing corresponding space savings to be made, and it is also possible to enlarge the water-cooling jacket and improve the flow of cooling water since there is no need for bolt holes for the valve attachment boss part.

Also, since the fuel injection valves 15 can be attached at the same time as the fuel rail 16 is fixed to cylinder head 3 if leaf spring 20 is interspersed between them, it is possible to reduce the amount of labor required for assembly and to make the assembly operation more efficient.

Also, as viewed in the direction of fuel injection valve axis B, since said fuel rail 16 is disposed offset toward the opposite side of air intake port 3d astride fuel injection valve 15 and the rail attachment boss part 3m on the side of cylinder head 3 is formed at a part facing outward from between air intake port 3d and fuel rail 16, the position of fuel injection valve 15 and the attachment position of fuel rail supporting stay part 16b on the side of the cylinder head come to more or less the same position in the direction perpendicular to the axis of fuel rail 16, whereby the bending moment resulting from the reaction to the fuel pressure is decreased and it is possible to avoid problems such as increased mass in order to increase the rigidity in parts of supporting stay part 16b.

Also, since the positions of supporting stay part 16b and fuel injection valve 15 in the direction perpendicular to the axis from fuel rail 16 are approximately the same, it is possible to make do with less space for supporting stay part 16b and fuel injection valve 15 in said direction perpendicular to the axis, and the freedom of layout can be increased - for example fuel injection valve 15 can be disposed roughly parallel with air intake port 3d and adjacent to this air intake port 3d while making the region of cylinder head 3 surrounding fuel injection valves 15 more compact.

Also, since fuel injection valve 15 can be disposed roughly parallel with air intake port 3d, stratification of the fuel and air can be promoted by introducing the fuel and air into the cylinder in the same direction, allowing stable combustion to be achieved with lean fuel/air mixtures.

Also, since a rail attachment boss part 3m for bolting fuel rail 16 to cylinder head 3 is fitted on the right side of fuel injection valve 15 as seen in the direction of fuel injection valve axis B and this rail attachment boss part 3m is made to face outward from between air intake port 3d and fuel rail 16, the operation of attaching fuel rail 16 can be made easier without fuel rail 16 itself getting in the way.

Also, since space a is provided so as to cut into the interior of air intake port 3d at the boundary part of the pair of air intake ports 3d, 3d on the left and right sides, and said fuel injection valve 15 is inserted into and disposed in this space a, fuel injection valve 15 can be disposed roughly parallel with air intake port 3d while making the parts of cylinder head 3 around fuel injection valve 15 more compact, stratification of the air and fuel can be promoted by supplying the air and fuel into the cylinder in the same direction, and it is thereby possible to achieve stable combustion with lean fuel/air mixtures which provides for improved fuel economy and cleaner exhaust emissions.

Also, since fuel rail attachment bolt 22 is screwed in along a direction parallel with said fuel injection valve axis B, it is possible to avoid problems such as tools hitting fuel rail 16 when this bolt 22 is screwed in, and the assembly operation can be further improved.

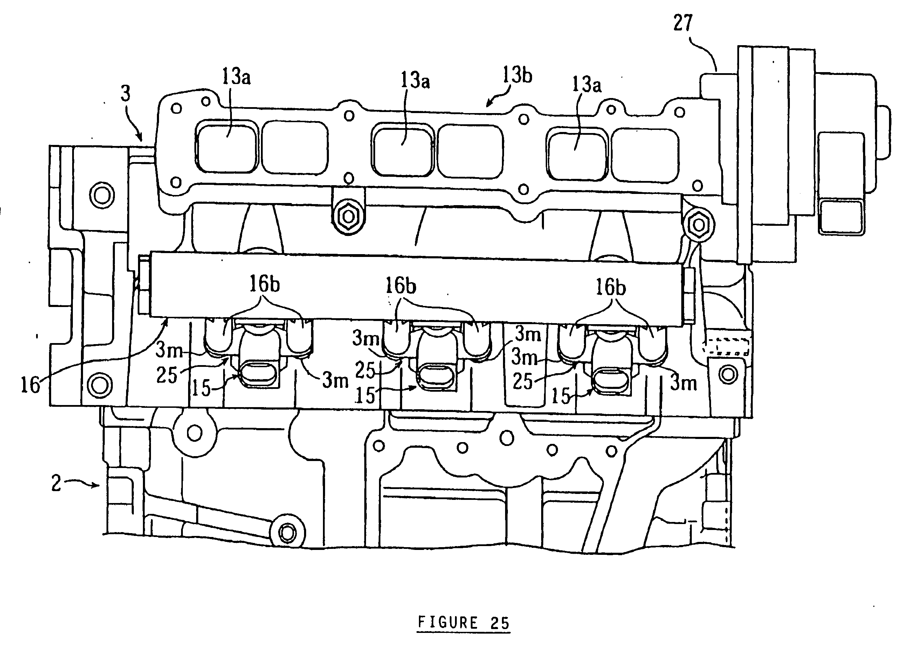

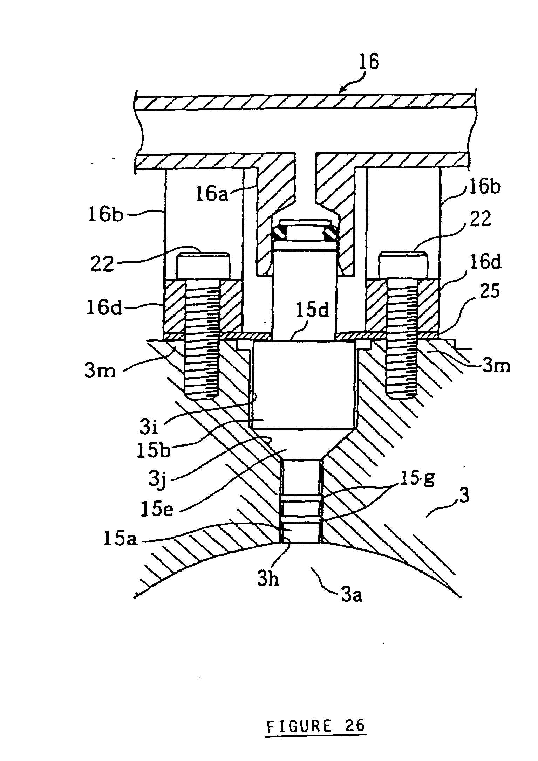

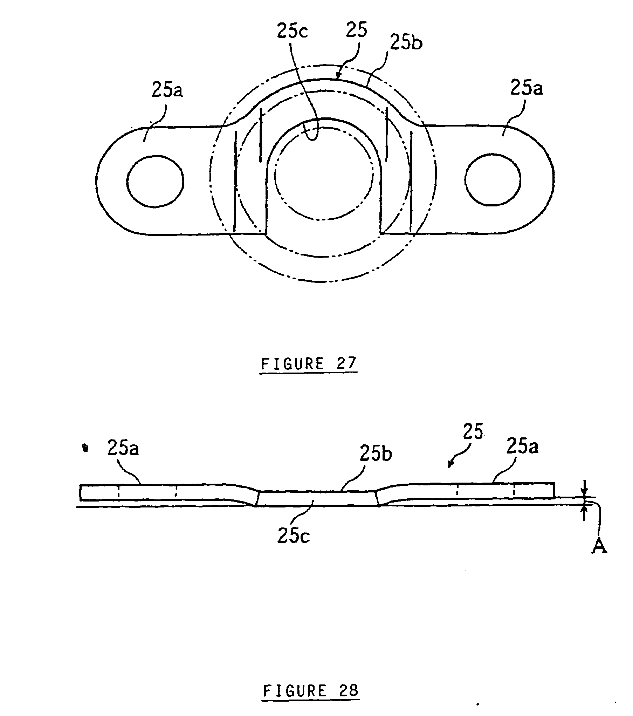

Figures 25 through 28 illustrate a fourth arrangement, embodying the present invention similar to the second arrangement, not being part of the present invention. The fourth arrangement is an example wherein a pair of supporting stays are provided on the left and right sides, and in these figures parts that are identical or correspond to those in Figures 1 through 17 are shown with the same reference numerals.

A pair of supporting stay parts 16b, 16b on the left and right sides are integrally formed with fuel rail 16 adjacent to fuel injection valves 15 on both sides in the direction of the camshaft, and a single leaf spring (valve clamping member) 25 is clamped in place by the flange parts 16d of both supporting stay parts 16b. This leaf spring 25 is made of spring steel sheet with a thickness of 0.5 to 3.0 mm, preferably 1.5 mm or thereabouts, and is equipped with a fixing part 25a which is clamped by said pair of left and right flange parts 16d, 16d in plan view and a clamp part 25b which is positioned between these flange parts 16d, 16d. This clamp part 25b is bent down along the line of the tip edge 16d' of said flange part 16d. The amount A of said curvature in clamp part 25b is set so that elastic deformation occurs in leaf spring 25 when the dimension H of the difference in height between flange part 15d of said fuel injection valve 15 and the rail attachment boss part 3m on the side of the cylinder head swings toward the side of (standard dimension plus tolerance), and leaf spring 25 is subjected to both elastic and plastic deformation when said difference dimension H swings toward the side of (standard dimension minus tolerance), as in the first three embodiments.

In this fourth arrangement, embodying present invention, since both ends of leaf spring 25 are clamped by the pair of left and right flange parts 16d, a more reliably uniform clamping force can be made to act on flange part 15d of fuel injection valve 15 by leaf spring 25, and fuel injection valve 15 can be securely fixed to cylinder head 3.

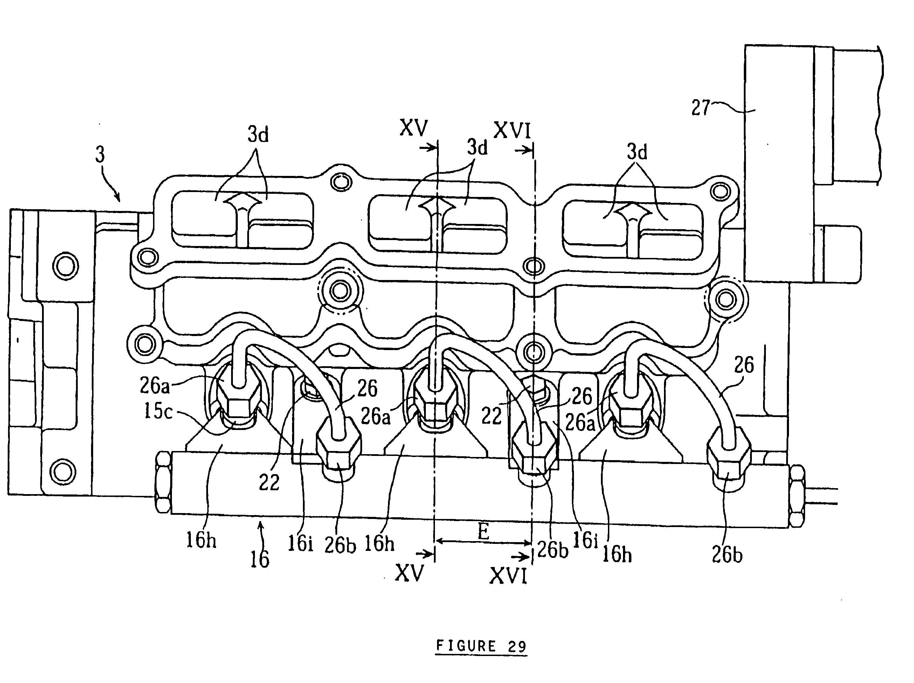

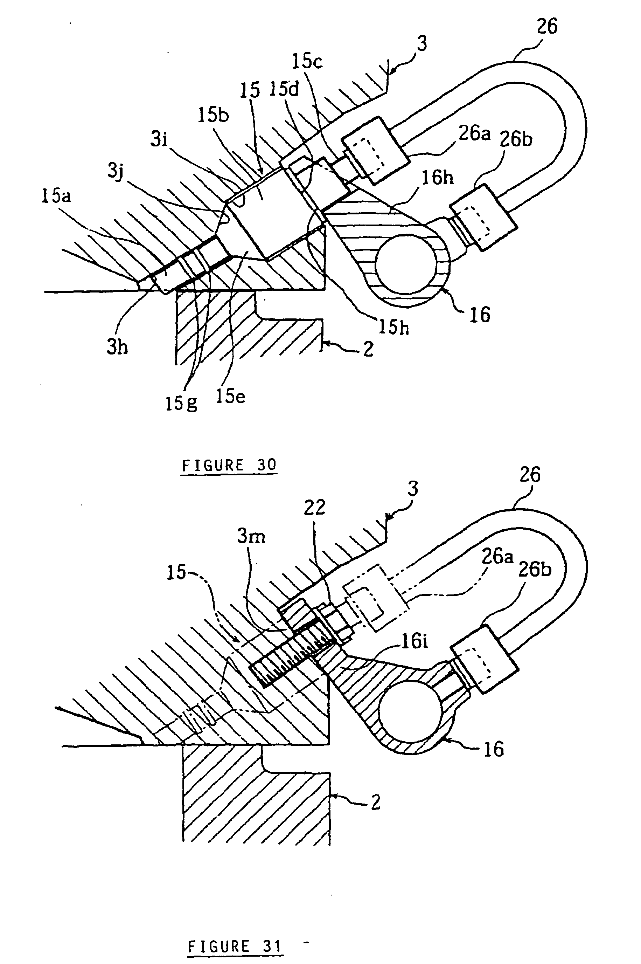

Figures 29 to 31 illustrate a fifth arrangement. This embodiment is an example, wherein the fuel injection valve clamping parts are integrally formed in the fuel rail itself, and in these figures parts that are identical or correspond to those in Figures 1 through 28 are shown with the same reference numerals.

Three valve clamping stay parts 16h and two supporting stay parts 16i are formed adjacent to each other on fuel rail 16. The supporting stay part 16i on the left side of Figure 14 is fitted adjacent to the valve clamping stay part 16h of the fuel injection valve 15 at the leftmost cylinder, and the supporting stay part 16i on the right side is fitted in the middle of the other two cylinders. Each of said supporting stay parts 16i is then fixed to rail attachment boss part 3m of cylinder head 3 by bolt 22, whereby each of said valve clamping stay parts 16h clamps the flange part 15d of each fuel injection valve 15.

Here, a coned disk spring 15h is interspersed between said valve clamping stay part 16h and flange part 15d, and this coned disk spring 15h has a similar function to leaf springs 20 and 25 in the abovementioned arrangements. By interspersing coned disk spring 15h it is possible to accommodate tolerances in the dimension of the height difference between the flange part 15d of fuel injection valve 15 and the rail attachment boss part 3m, and it is possible to securely fix the fuel injection valve 15 to the cylinder head without applying excessive pressure to fuel injection valve 15.

Also, the downstream end part of fuel supply pipe 26 is connected by screwing joint 26a into the fuel introduction part 15c of each of said fuel injection valves 15. The upstream end of each of said fuel supply pipes 26 is connected by a joint 26b to a part of fuel rail 16 displaced in the camshaft direction by an amount E from each fuel injection valve.

In this fifth arrangement, since fuel rail 16 is provided with a supporting stay part 16i and valve clamping stay part 16h and each of said valve clamping stay parts 16h clamps the flange part 15d of each of the abovementioned fuel injection valves 15 via coned disk spring 15h when supporting stay part 16i is attached to cylinder head 3, it is possible to achieve a reliable flow of cooling water by preventing constriction of the water cooling jacket, and it is also possible to fix fuel injection valves 15 at the same time as fuel rail 16 is fixed to the engine, thereby making the assembly work more efficiently.

Also, since said supporting stay part 16i and said valve clamping stay part 16h are provided adjacent to each other in the direction of the camshaft, supporting stay part 16i, valve clamping stay part 16h and fuel injection valves 15 come to roughly the same positions in the direction perpendicular to the fuel rail axis, whereby it is possible to make do with less room in the direction perpendicular to these fuel rails and it is easy to make enough room in which to place them.

Furthermore, since each of the abovementioned fuel injection valves 15 and the parts of said fuel rail 16 that are displaced in the direction of the camshaft are connected by fuel supply pipes 26, a large curvature R (radius of curvature) can be achieved in fuel supply pipes 26 while positioning fuel rail 16 adjacent to fuel injection valves 15, the lifetime of fuel supply pipe 26 can be assured, and the resistance of the fuel ducts can be reduced.

According to an arrangement of an in-cylinder fuel injected engine, as described above, since said fuel rail is fitted offset toward the side opposite said air intake ports and astride said fuel injection valves, and since the rail attachment boss parts are formed at parts facing out from between the air intake ports and fuel rail, the positions of the fuel injection valves and the attachment positions of the fuel rail supporting stays on the cylinder head come to approximately the same position in the direction at right angles to the axis of the fuel rail, thereby allowing the bending moment arising from reaction forces to the abovementioned fuel pressure to be correspondingly reduced, and making it possible to avoid problems such as increased weight due to increasing the rigidity of the supporting stay parts.

Also, since the supporting stays and fuel injection valves are situated in roughly the same position in the direction perpendicular to the fuel rail, it is possible to make do with less space for the supporting stays and fuel injection valves in the direction perpendicular to the fuel rail, making the region surrounding the fuel injection valves on the cylinder head more compact, and it is possible to achieve greater freedom in the layout, such as disposing the fuel injection valves roughly parallel with the air intake ports and adjacent to these air intake ports. And since the fuel injection valves can be disposed roughly parallel with the air intake ports, the fuel and air can be introduced into the cylinders in the same direction, thereby promoting stratification of the fuel and air and allowing stable combustion to be achieved with lean fuel/air mixes.

Furthermore, since the rail attachment boss parts to which the supporting stays are bolted are disposed facing out from between the air intake ports and the fuel rail, no obstructions are caused by the fuel rail itself during the attachment operation, making the attachment operation more efficient.

Since rail attachment boss parts are disposed on one side of the fuel injection valves either on or adjacent to a straight line parallel with the camshaft that intersects the fuel injection valve axis as seen in the direction of the fuel injection valve axis, and since valve attachment boss parts for bolting said fuel injection valves to the cylinder head are formed on the other side, it is possible to make do with less space for the supporting stays, fuel injection valves and valve attachment boss parts in the direction perpendicular the fuel rail axis, and in this case it is also possible to increase the layout freedom of the fuel injection valves while making the parts of the cylinder head around the fuel injection valves more compact.

Further, since a space that cuts into the interior of the air intake ports is provided at the boundary part of a pair of air intake ports on the left and right sides, and since the abovementioned fuel injection valves are disposed by inserting them into this space, the fuel injection valves can be disposed roughly parallel with the air intake ports while making the parts of the cylinder head around the fuel injection valves more compact, and stratification of the air and fuel can be promoted by supplying the air and fuel into the cylinders in the same direction, thereby allowing the engine to operate stably with lean fuel/air mixes, improving its fuel consumption and promoting cleaner exhaust emissions.

Furthermore, since said rail attachment boss parts project in the direction of said fuel injection valve axis, it is possible to reduce the length of the supporting stays on said fuel rail in the direction of said fuel injection valve axis, and it is possible to increase the rigidity of these supporting stay parts while making them lighter.

Additionally, since the fuel rail attachment bolts and fuel injection valve attachment bolts are screwed in along a direction parallel with said fuel injection valve axis, it is possible to avoid problems such as tools striking the fuel rail when these bolts are screwed in, thereby allowing the assembly operation to be made even more efficient.

According to another arrangement, as described above, the supporting stay on which the fuel rail is provided is bolted to the cylinder head, and a valve clamping member for clamping the fuel injection valves to the cylinder head is gripped by this supporting stay and the cylinder head, and there is thus no need to provide a dedicated attachment boss part for the fuel injection valves on the cylinder head and it is thus made correspondingly easier to make room for incorporating the boss part. The fuel injection valves can also be fixed to the cylinder head simply by fixing the fuel rail to the cylinder head by fitting it between the valve clamp members, thereby reducing the amount of labor required for assembly.

Also, since there is no need for a dedicated attachment boss part for the fuel injection valves, the boss part for the provision of screw holes for said boss part does not project into the water cooling jacket, and it is possible to avoid problems such as constriction of the water cooling jacket and impairment of the cooling water flow.

Accordingly, a supporting stay is provided adjacent to one side of said fuel injection valves in the camshaft direction, so that the positions of the fuel injection valves and supporting stay become roughly the same in the direction perpendicular to the fuel rail and thus only a little room is needed in the direction perpendicular to the fuel rail for the supporting stay and fuel injection valves.

Since a pair of said supporting stays on the left and right sides is disposed adjacent to both sides in the direction of the camshaft astride said fuel injection valves, less room is needed for disposing the supporting stays and fuel injection valves in the direction perpendicular to the fuel rail, the flange parts of the fuel injection valves can be uniformly clamped by the valve clamping member, and the fuel injection valves can be securely fixed to the cylinder head.

Furthermore, since a valve clamping stay is provided on said fuel rail extending toward the fuel injection valves, and said valve clamping stay clamps the flange parts of said fuel injection valves when said fuel rail is attached to the cylinder head, and thus, like the invention according to claim 1, it is possible to prevent constriction of the water cooling jacket and secure an adequate flow of cooling water, and in addition it is possible to fix the fuel injection valves at the same time as the fixing of the fuel rail and the assembly work can be made even more efficient since there is no need to intersperse a valve clamping member.

Additionally, since said fuel rail is provided with a supporting stay adjacent to one side of said valve clamping stay in the axial direction of the camshaft, and said valve clamping stay clamps the flange part of said fuel injection valves when the supporting stay is bolted to the cylinder head, so that the supporting stay, valve clamping stay and fuel injection valves come at roughly the same position in the direction perpendicular to the fuel rail, and thus they only need a little room in the direction perpendicular to the fuel rail and it is easy to make enough room in which to put them.

In that, said fuel injection valves and the parts of said fuel injection valves that are displaced in the camshaft direction are linked by a fuel supply pipe, whereby it is possible to achieve a large curvature R (radius of curvature) in the fuel supply pipe while disposing the fuel rail adjacent to the fuel injection valves, it is possible to ensure that the fuel supply pipe has a long lifetime, and it is possible to reduce the resistance to flow in the fuel ducts.

## Claims

1. Direct injection type internal combustion engine having a fuel rail (16) for supplying fuel to fuel injection valves (15) inserted in valve attachment holes formed in a cylinder head (3),
and having a valve clamping member (20,25) of an elastic material having a fixing part (20a,25a) for fixing the valve clamping member (20,25) to a valve attachment boss part (3k) of a cylinder head (3), and a clamp part (20b,25b) for clamping a flange part (15d) of said injection valve (15) to thereby fix the fuel injection valve (15) on the cylinder head (3),
wherein the valve attachment boss part (3k) of the cylinder head (3) is positioned further outwardly by a height difference dimension (H) at the cylinder head (3) in a direction of an injection valve axis (B) than the flange part (15d) of the injection valve (15),
wherein each fuel injection valve (15) comprises a valve side positioning part (15e) and each valve attachment holes comprises a head side positioning part (3j), the valve side positioning part (15e) directly contacts the head side positioning part (3j) when the fuel injection valve (15) is fixed,
wherein the clamp part (20b,25b) is folded by a specific folding amount (A) or inclined by a specific angle from the fixing part (20a,25a), and
wherein the valve clamping member (20,25) is plastically deformable in the opposite direction to the direction of said folding, and the folding amount (A) is set so that elastic deformation occurs when a tolerance of said difference dimension (H) is positive and plastic deformation occurs when it is negative.

2. Direct injection type internal combustion engine according to claim 1, **characterized in that** said flange part (15d) is arranged within the valve attachment boss part (3k), and **in that** the height difference dimension (H) from said flange part (15d) to the valve attachment boss part (3k) is greater than or equal to zero.

3. Direct injection type internal combustion engine according to claim 1 or 2, **characterized in that** said height difference dimension (H) is equal to a standard dimension ± a tolerance.

4. Direct injection type internal combustion engine according to at least one of the claims 1 to 3, **characterized in that** said valve clamping member (20,25) is elastically formable when the fuel injection valve (15) is fixed opposite to an angle-inclination plastically imprinted to said clamping member prior to the fixing of the fuel injection valve (15).

5. Direct injection type internal combustion engine according to at least one of the claims 1 to 4, **characterized in that** said valve clamping member (20,25) comprises said clamp part (20a,25a) being adapted to clamp two places on a straight line through the center of the annular flange part (15d) of said fuel injection valve and at least one fixing part (20b,25b) extending radially out from said clamp part (20a,25a).

6. Direct injection type internal combustion engine according to at least one of the claims 1 to 5, **characterized in that** the fixing part (20a,25a) extends obliquely radially out from one end of said clamp part (20b,25b) and is adapted to be bolted to said valve attachment boss part (3k) in such a way that it covers a washer member (21) of higher rigidity than said valve clamping member (20) at said fixing part (20a,25a), wherein said washer member (21) may comprise an elongated part which extends to the other end of said clamp part (25b) and exerts a clamping force uniformly from one end of said clamp part (25b) to the other.

7. Direct injection type internal combustion engine according to at least one of the claims 1 to 5, **characterized in that** the fixing parts (20a,25a) extend radially out from both ends of said clamp part (20b,25b) in a symmetrical fashion, and that said fixing parts are both adapted to be bolted to valve attachment boss part (3k) formed on either side of the fuel injection valve (15).

8. Direct injection type internal combustion engine according to at least one of the claims 1 to 7, **characterized in that** the valve clamping member (20,25) is made of spring steel sheet.

9. Direct injection type internal combustion engine according to at least one of the claims 1 to 8, **characterized in that** injection nozzles (15a) of the fuel injection valves (15) open into combustion chambers (3a), wherein spray recess parts (5b) are formed at head parts (5a) of pistons (5) into which spray recess parts (5b) the fuel injected from said fuel injection valves (15) is guided, said spray recess parts (5b) being disposed offset toward said injection nozzles (15a) as seen in the direction of the camshaft, and being formed with a shape that guides the injected fuel to electrodes (11a) of a spark plug (11) disposed roughly concentrically with the cylinder axis (C).

10. Direct injection type internal combustion engine according to claim 9, **characterized in that** said spray recess part (5b) is formed with a roughly egg-shaped profile with the parts further forward in the injection direction being narrower than the parts to the rear as seen from the combustion chamber side in the direction of the cylinder axis (C).

11. Direct injection type internal combustion engine according to claim 9 or 10, **characterized in that** the cross-sectional profile of said spray recess part (5b) in a direction perpendicular to the camshaft including said fuel injection valve axis (B) comprises an introduction surface (5d) which is a sloping surface roughly parallel with said fuel injection valve axis (B), a bottom surface following on from said introduction surface (5d) where the front is slightly raised in the fuel injection direction, and a guide surface (5c) following on from said bottom surface which rises up after an intervening curved surface.

12. Direct injection type internal combustion engine according to at least one of the claims 9 to 11, **characterized in that** two air inlet ports (3d) are provided; said fuel injection valves (15) are disposed at the boundary part of both air intake ports (3d); and one of said both air intake ports (3d) is closed off when the engine (1) is running with lean fuel/air mixes.

13. Direct injection type internal combustion engine according to at least one of the claims 9 to 12, **characterized in that** the cross-sectional profile of said spray recess part (5b) parallel with the camshaft including the cylinder has left and right side walls (5e) that rise up roughly in the shape of circular arcs.

## Patentansprüche

1. Brennkraftmaschine vom Direkteinspritzungstyp, die eine Kraftstoffschiene (16) zum Zuführen von Kraftstoff zu den Kraftstoffeinspritzventilen (15) hat, eingesetzt in Ventilbefestigungsbohrungen, die in einem Zylinderkopf (3) gebildet sind,
und mit einem Ventilklemmteil (20, 25) aus einem elastischen Material mit einem Befestigungsteil (20a, 25a) zum Befestigen des Ventilklemmteiles (20, 25) an einem Ventilbefestigungsnabenteil (3k) eines Zylinderkopfes (3), und einem Klemmteil (20b, 25b) zum Klemmen eines Flanschteils (15d) des Einspritzventils (15), um **dadurch** das Kraftstoffeinspritzventil (15) an dem Zylinderkopf (3) zu befestigen,
wobei das Ventilbefestigungsnabenteil (3k) des Zylinderkopfes (3) um eine Höhendifferenzabmessung (H) weiter außen als der Flanschteil (15d) des Einspritzventils (15) an dem Zylinderkopf (3) in einer Richtung einer Einspritzventilachse (B) positioniert ist,
wobei jedes Kraftstoffeinspritzventil (15) einen ventilseitigen Positionierungsteil (15e) aufweist und jede der Ventilbefestigungsbohrungen einen kopfseitigen Positionierungsteil (3j) aufweist, wobei das ventilseitige Positionierungsteil (15e) das kopfseitige Positionierungsteil (3j) direkt berührt, wenn das Kraftstoffeinspritzventil (15) befestigt ist,
wobei das Klemmteil (20b, 25b) um einen bestimmten Faltbetrag (A) gefaltet ist oder um einen bestimmten Winkel gegenüber dem Befestigungsteil (20a, 25a) geneigt ist, und
wobei das Ventilklemmteil (20, 25) in der zu der Richtung dieses Faltens entgegengesetzte Richtung plastisch verformbar ist und der Faltenbetrag (A) so festgelegt wird, dass eine elastische Verformung auftritt, wenn eine Toleranz der Differenzgrö-ße (H) positiv ist und eine plastische Verformung auftritt, wenn sie negativ ist.

2. Brennkraftmaschine vom Direkteinspritzungstyp nach Anspruch 1, **dadurch gekennzeichnet, dass** das Flanschteil (15d) innerhalb des Ventilbefestigungsnabenteils (3k) angeordnet ist und **dadurch**, dass die Höhendifferenzabmessung (H) von dem Flanschteil (15d) zu dem Ventilbefestigungsnabenteil (3k) größer als oder gleich Null ist.

3. Brennkraftmaschine vom Direkteinspritzungstyp nach Anspruch 1 oder 2, **dadurch gekennzeichnet, dass** die Höhendifferenzabmessung (H) gleich einer Standardabmessung ± einer Toleranz ist.

4. Brennkraftmaschine vom Direkteinspritzungstyp nach zumindest einem der Ansprüche 1 bis 3, **dadurch gekennzeichnet, dass** das Ventilklemmteil (20, 25) elastisch verformbar ist, wenn das Kraftstoffeinspritzventil (15) entgegengesetzt zu einer Winkelneigung befestigt ist, die plastisch aufgedruckt auf dem Klemmteil ist, vor dem Befestigendes Kraftstoffeinspritzventils (15).

5. Brennkraftmaschine vom Direkteinspritzungstyp nach zumindest einem der Ansprüche 1 bis 4, **dadurch gekennzeichnet, dass** das Ventilklemmteil (20, 25) aufweist das Klemmteil (20a, 25a), das vorgesehen ist, zwei Orte auf einer geraden Linie durch die Mitte des ringförmigen Flanschteils (15d) des Kraftstoffeinspritzventils zu klemmen und zumindest ein Befestigungsteil (20b, 25b), das sich radial nach außen von dem Klemmteil (20a, 25a) erstreckt.

6. Brennkraftmaschine vom Direkteinspritzungstyp nach zumindest einem der Ansprüche 1 bis 5, **dadurch gekennzeichnet, dass** sich das Befestigungsteil (20a, 25a) schräg radial nach außen von einem Ende des Klemmteils (20b, 25b) erstreckt und vorgesehen ist, mit dem Ventilbefestigungsnabenteil (3k) auf solch eine Weise verschraubt zu werden, dass es ein Unterlegteil (21) von höherer Steifigkeit als das Ventilklemmteil (20) an dem Befestigungsteil (20a, 25a) abdeckt, wobei das Unterlegteil (21) ein lang gestrecktes Teil aufweisen kann, das sich zu dem anderen Ende des Klemmteils (20b) erstreckt und eine Klemmkraft gleichmäßig von einem Ende des Klemmteils (20b) zu dem anderen ausübt.

7. Brennkraftmaschine vom Direkteinspritzungstyp nach zumindest einem der Ansprüche 1 bis 5, **dadurch gekennzeichnet, dass** sich die Befestigungsteile (20a, 25a)von beiden Enden des Klemmteils (20a, 25a) in einer symmetrischen Weise radial nach außen erstrecken und dass die Befestigungsteile beide vorgesehen sind, an dem Ventilbefestigungsnabenteil (3k), gebildet auf beiden Seiten des Kraftstoffeinspritzventils (15), verschraubt zu werden.

8. Brennkraftmaschine vom Direkteinspritzungstyp nach zumindest einem der Ansprüche 1 bis 7, **dadurch gekennzeichnet, dass** das Ventilklemmteil (20, 25) aus Federstahlblech hergestellt ist.

9. Brennkraftmaschine vom Direkteinspritzungstyp nach zumindest einem der Ansprüche 1 bis 8, **dadurch gekennzeichnet, dass** die Einspritzdüsen (15a) der Kraftstoffeinspritzventile (15) sich in die Brennkammern (3a) hinein öffnen, wobei Sprühaussparungsteile (5b) an den Kopfteilen (5a) der Kolben (5) gebildet sind, wobei in die Sprühaussparungsteile (5b) der von den Kraftstoffeinspritzventilen (15) eingespritzte Kraftstoff geführt wird, die Sprühaussparungsteile (5b) in die Richtung zu den Einspritzdüsen (15a) versetzt angeordnet sind, wenn in der Richtung der Nockenwelle gesehen, und mit einer Form gebildet sind, die den eingespritzten Kraftstoff zu den Elektroden (11a) einer Zündkerze (11), die ungefähr konzentrisch mit der Zylinderachse (C) angeordnet ist, führt.

10. Brennkraftmaschine vom Direkteinspritzungstyp nach Anspruch 9, **dadurch gekennzeichnet, dass** das Sprühaussparungsteil (5b) mit einem ungefähr ei- förmigen Profil gebildet ist, wobei die Teile weiter vorwärts in Einspritzrichtung, schmaler als die Teile nach rückwärts sind, wenn von der Seite der Brennkammer in die Richtung der Zylinderachse (C) gesehen.

11. Brennkraftmaschine vom Direkteinspritzungstyp nach Anspruch 9 oder 10, **dadurch gekennzeichnet, dass** das Querschnittprofil des Sprühaussparungsteils (5b) in einer Richtung rechtwinklig zu der Nockenwelle, die die Kraftstoffeinspritzventilachse (B) enthält, eine Einleitungsoberfläche (5d) aufweist, die eine geneigte Oberfläche ist, ungefähr parallel mit der Kraftstoffeinspritzventilachse (B), eine Bodenseite, die von der Einleitungsoberfläche (5d) sich fortsetzt, wobei die Vorderseite in der Kraftstoffeinspritzrichtung leicht ansteigt, und eine Führungsoberfläche (5c), die sich von der Bodenseite weiter ansteigend fortsetzt, nach einer dazwischenliegenden gekrümmten Oberfläche.

12. Brennkraftmaschine vom Direkteinspritzungstyp nach zumindest einem der Ansprüche 9 bis 11, **dadurch gekennzeichnet, dass** zwei Lufteinlassöffnungen (3d) vorgesehen sind; die Kraftstoffeinspritzventile (15) an dem Grenzteil beider Lufteinlassöffnungen (3d) angeordnet sind; und eine der beiden Lufteinlassöffnungen (3d) geschlossen wird, wenn der Motor (1) mit mageren Kraftstoff- / Luft- Gemischen läuft.

13. Brennkraftmaschine vom Direkteinspritzungstyp nach zumindest einem der Ansprüche 9 bis 12, **dadurch gekennzeichnet, dass** das Querschnittsprofil des Sprühaussparungsteils (5b), parallel mit der Nockenwelle einschließlich des Zylinders, linke und rechte Seitenwände (5e) hat, die sich ungefähr in der Form von kreisförmigen Bögen erheben.

## Revendications

1. Moteur à combustion interne du type à injection directe ayant une rampe de carburant (16) destinée à fournir du carburant aux soupapes d'injection de carburant (15) insérées dans des orifices de fixation de soupape formés dans une culasse (3),
et ayant un élément de serrage de soupape (20, 25) en matière élastique comprenant un élément de fixation (20a, 25a) servant à fixer l'élément de serrage de soupape (20, 25) à une partie de bossage de fixation de soupape (3k) d'une culasse (3), et un élément de serrage (20b, 25b) destiné à serrer une partie en épaulement collerette (15d) de ladite soupape d'injection (15) pour fixer ainsi la soupape d'injection de carburant (15) sur la culasse (3),
dans lequel la partie de bossage de fixation de soupape (3k) de la culasse (3) est positionnée plus vers l'extérieur d'une cote d'écart de hauteur (H) au niveau de la culasse (3) dans une direction d'un axe de soupape d'injection (B) par rapport à la partie en épaulement (15d) de la soupape d'injection (15),
dans lequel chaque soupape d'injection de carburant (15) comprend un élément de positionnement latéral de la soupape (15e) et chaque orifice de fixation de soupape comprend un élément de positionnement latéral de la tête (3j), l'élément de positionnement latéral de la soupape (15e) touche directement l'élément de positionnement latéral de la tête (3j) lorsque la soupape d'injection du carburant (5) est fixée,
dans lequel l'élément de serrage (20b, 25b) est plié suivant une quantité de pliage spécifique (A) ou incliné par un angle spécifique à partir de l'élément de fixation (20a, 25a), et
dans lequel l'élément de serrage de soupape (20, 25) est plastiquement déformable dans la direction opposée à la direction dudit pliage, et la quantité de pliage (A) est fixée de telle sorte que la déformation élastique survient lorsqu'une tolérance de ladite cote d'écart (H) est positive et que la déformation plastique survient lorsqu'elle est négative.

2. Moteur à combustion interne du type à injection directe selon la revendication 1, **caractérisé en ce que** ladite partie en épaulement (15d) est agencée dans la partie de bossage de fixation de soupape (3k), et **en ce que** la cote d'écart de hauteur (H) à partir de ladite partie en épaulement (15d) jusqu'à la partie de bossage de fixation de soupape (3k) est supérieure ou égale à zéro.

3. Moteur à combustion interne du type à injection directe selon la revendication 1 ou la revendication 2,
**caractérisé en ce que** ladite cote d'écart de hauteur (H) est égale à une dimension standard ± une tolérance.

4. Moteur à combustion interne du type à injection directe selon au moins une des revendications 1 à 3,
**caractérisé en ce que** ledit élément de serrage de soupape (20,25) est élastiquement déformable lorsque la soupape d'injection du carburant (15) est fixée de façon opposée à une inclinaison angulaire imprimée de façon plastique sur ledit élément de fixation avant la fixation de la soupape d'injection du carburant (15).

5. Moteur à combustion interne du type à injection directe selon au moins une des revendications 1 à 4, **caractérisé en ce que** ledit élément de serrage de soupape (20, 25) comprend ledit élément de serrage (20a, 25a) conçu pour serrer deux endroits sur une ligne droite traversant le centre de la partie en épaulement annulaire (15d) de ladite soupape d'injection du carburant et au moins un élément de fixation (20b, 25b) qui s'étend de manière radiale en dehors dudit élément de serrage (20a, 25a).

6. Moteur à combustion interne du type à injection directe selon au moins une des revendications 1 à 5, **caractérisé en ce que** l'élément de fixation (20a, 25a) s'étend en biais de manière radiale à partir d'une extrémité de l'élément de serrage (20b, 25b) et est conçu pour être vissé à ladite partie de bossage de fixation de soupape (3k) de telle sorte qu'il couvre une rondelle (21) plus rigide que ledit élément de serrage de soupape (20) au niveau dudit élément de fixation (20a, 25a), dans lequel ladite rondelle (21) peut comporter une partie allongée qui s'étend à l'autre extrémité dudit élément de serrage (25b) et exerce de façon uniforme une force de serrage d'une extrémité à l'autre dudit élément de serrage (25b).

7. Moteur à combustion interne du type à injection directe selon au moins une des revendications 1 à 5, **caractérisé en ce que** les éléments de fixation (20a, 25b) s'étendent de manière radiale à partir des deux extrémités dudit élément de serrage (20b, 25b) de façon symétrique et **en ce que** lesdits éléments de fixation sont tous deux conçus pour être vissés à la partie de bossage de fixation de soupape (3k) formée de part et d'autre de la soupape d'injection du carburant (15).

8. Moteur à combustion interne du type à injection directe selon au moins une des revendications 1 à 7,
**caractérisé en ce que** l'élément de serrage de soupape (20, 25) est en tôle élastique à ressort.

9. Moteur à combustion interne du type à injection directe selon au moins une des revendications 1 à 8, **caractérisé en ce que** les injecteurs (15a) des soupapes d'injection de carburant (15) s'ouvrent dans les chambres de combustion (3a), dans lesquelles des parties en retrait de pulvérisation (5b) sont formées au niveau des parties de nez (5a) de pistons (5), dans lesquelles parties en retrait de pulvérisation (5b) est guidé le carburant injecté à partir desdites soupapes d'injection de carburant (15), lesdites parties en retrait de pulvérisation (5b) étant disposées de façon décalée vers lesdits injecteurs (15a), tel qu'on le voit dans la direction de l'arbre à came, et étant d'une forme qui guide le carburant injecté vers les électrodes (11a) d'une bougie d'allumage (11) disposées de façon sensiblement concentrique par rapport à l'axe de cylindre (C).

10. Moteur à combustion interne du type à injection directe selon la revendication 9, **caractérisé en ce que** ladite partie en retrait de pulvérisation (5b) est formée d'un profil sensiblement ovoïde, les parties les plus vers l'avant dans la direction d'injection étant plus étroites que les parties à l'arrière, tel qu'on le voit depuis le côté de la chambre de combustion dans la direction de l'axe du cylindre (C).

11. Moteur à combustion interne du type à injection directe selon la revendication 9 ou 10, **caractérisé en ce que** le profil en coupe de ladite partie en retrait de pulvérisation (5b) dans une direction perpendiculaire à l'arbre à came comprenant ledit axe de soupape d'injection de carburant (B) comprend une surface d'introduction (5d) qui est une surface inclinée sensiblement parallèle audit axe de soupape d'injection de carburant (B), une surface inférieure partant de ladite surface d'introduction (5b) où l'avant est légèrement soulevé dans la direction de l'injection de carburant, et une surface de guidage (5c) partant de ladite surface inférieure qui se soulève après une surface incurvée intermédiaire.

12. Moteur à combustion interne du type à injection directe selon au moins une des revendications 9 à 11, **caractérisé en ce que** deux orifices d'entrée d'air (3d) sont prévus ; lesdites soupapes d'injection de carburant (15) sont disposées au niveau de la partie de limite des deux orifices d'admission d'air (3d) ; et un desdits deux orifices d'admission d'air (3d) est fermé lorsque le moteur (1) fonctionne avec des mélanges air/carburant pauvres.

13. Moteur à combustion interne du type à injection directe selon au moins une des revendications 9 à 12, **caractérisé en ce que** le profil en coupe de ladite partie en retrait de pulvérisation (5b) parallèle à l'arbre à came comprenant le cylindre a des parois latérales gauche et droite (5e) qui se soulèvent sensiblement sous forme d'arcs circulaires.
